# EUROPEAN PATENT APPLICATION

(11) **EP 3 565 265 A1**
(43) Date of publication of application: **06.11.2019**
(21) Application number: 18170046.9
(22) Date of filing: 30.04.2018
(51) Int. Cl.: H04N 21/414, H04N 21/61, H04N 21/475

(54) **PERSONAL MEDIA STREAMING APPLIANCE ECOSYSTEM**

(71) Applicant: Spotify AB, 111 53 Stockholm (SE)
(72) Inventor: CEDBORG, Andreas, 111 53 Stockholm (SE); BARVESTEN, Mats, 111 53 Stockholm (SE); BROMAND, Daniel, 111 53 Stockholm (SE); JURCUT, Horia, 111 53 Stockholm (SE); OSKARSSON, Johan, 111 53 Stockholm (SE)
(74) Representative: Kransell & Wennborg KB

(57) **Abstract**

A system is provided for streaming media content in a vehicle. The system includes a personal media streaming appliance system configured to connect to a media delivery system and receive media content from the media delivery system at least via a cellular network. The personal media streaming appliance system operates to transmit a media signal representative to the received media content to a vehicle media playback system so that the vehicle media playback system operates to play the media content in the vehicle. The personal media streaming appliance system can be part of an ecosystem, in which one or more settings of the appliance can be remotely configured using another computing device in the ecosystem.

## Description

### TECHNICAL FIELD

The present disclosure relates to a method and device for providing media content to a personal media streaming appliance (PMSA) for playback in a vehicle.

### BACKGROUND

Many people enjoy consuming media content while travelling or during other activities. When driving or navigating in vehicles, for example, many drivers and passengers listen to audio content, such as songs, albums, podcasts, audiobooks, and other types of audible content from devices that are built in the vehicles, such as terrestrial or satellite radios and fixed media players that can play back media content stored on CDs, USB drives, or SD cards. Some vehicles have internet access and can stream or download media content.

Alternatively, a mobile device, such as a smartphone or a tablet running music streaming applications can be used. However, mobile devices are not well suited for use in a vehicle environment for various reasons. For example, mobile devices are not readily accessible or controllable while driving or navigating. Further, connection between a mobile device and a vehicle audio system is often inconvenient and unreliable. Moreover, the music streaming application is not automatically ready to run and play media content, and the user needs to pick up the mobile device and open the music streaming application and control a sophisticated user interface to play media content. Additionally, many users have limited mobile data available via their mobile devices and are concerned about data usage while using the music streaming application in the vehicle. Battery drainage and legal restrictions on use while driving are further drawbacks to using mobile devices for playing media content in the vehicle.

Consuming media content in a vehicle presents many challenges. In general, a user in a moving vehicle may have limited attention available for interacting with a media playback device due to the need to concentrate on travel related activities, such as driving and navigation. Therefore, while a vehicle is moving, it can be difficult for a user in the vehicle to interact with a media playback device without disrupting the driving or navigation. Further, the user interface of a media playback device can be overly complex, or may require such fine motor skills that it can be difficult to use while traveling in a vehicle. Voice-based user interfaces also encounter significant challenges to use in a vehicle environment. The passenger areas of a vehicle are often noisy due to engine noise, road noise, wind and weather noises, passenger noises, and the sound of any media content that may be playing on a media playback system in the vehicle. This noise hampers the ability of the voice-based user interface to interact with a user. Moreover, accessing media content while travelling may be difficult, expensive, or impossible depending on network availability or capacity along the route of travel. Further, accessing and playing media content can require significant amounts of electric power.

There exists a need for a media playback system that is easy to use and control for media content playback while providing personalized user experience of consuming media content in a vehicle.

### SUMMARY

In general terms, the present disclosure relates to a personal media streaming appliance (PMSA) ecosystem. In one possible configuration and by non-limiting example, the PMSA ecosystem allows for remote configuration of a personal media streaming appliance system. Various aspects are described in this disclosure, which include, but are not limited to, the following aspects.

One aspect is a method for providing media content to a personal media streaming appliance (PMSA) for playback in a vehicle. The method may include receiving a preset signal from a preset signal source of the PMSA. The PMSA may be associated with a user account and constructed for installation and use in the vehicle. The method may further include providing at least a portion of first content associated with the user account to the PMSA responsive to receiving the preset signal; receiving, while the PMSA is in an inactive state, a preset adjustment for the PMSA from a media playback application operating on a mobile device; responsive to the PMSA entering an active state, providing an updated setting to the PMSA based on the preset adjustment; and/or receiving a second preset signal from the PMSA. The second preset signal may be associated with the preset signal source. The method may further include providing at least a portion of second content associated with the user account responsive to receiving the second preset signal to the PMSA.

In certain examples, the preset signal source may include a preset button of the PMSA, and the preset signal may be generated upon actuation of the preset button of the PMSA.

In certain examples, the method may include, upon receiving the preset adjustment from the mobile device, storing the preset adjustment at least until the PMSA enters the active state.

In certain examples, the preset signal may include at least one of a user account identifier and a device identifier. The user account identifier may be configured to identify the user account associated with the PMSA. The device identifier may be configured to identify the PMSA.

In certain examples, the preset adjustment may include a preset identifier for identifying the preset button.

In certain examples, the preset adjustment may include preset adjustment information that indicates how the preset button setting is adjusted.

Another aspect is a system for providing media content in a vehicle. The system may include a media delivery system, a personal media streaming appliance (PMSA), and a media playback application. The PMSA may be configured for installation and use in the vehicle. The PMSA may be associated with a user account. The media playback application may operate on a mobile device. The media playback application may be associated with the user account. The media delivery system may operate to obtain a playback configuration adjustment from the media playback application, and provide an updated setting to the PMSA based on the playback configuration adjustment. In certain example, the playback configuration adjustment can be obtained while the PMSA is in an inactive state, and the updated setting is provided to the PMSA in response to the PMSA entering an active state.

In certain example, the PMSA may include a plurality of microphones arranged to resist vehicle noise so that the PMSA is configured for use in a vehicle environment.

In certain example, the PMSA may be configured to be free of a touch screen display so that the PMSA is configured for use in a vehicle environment.

In certain example, the PMSA may include a preset button for initiating playback of media content associated with the preset button. The playback configuration adjustment may include a preset adjustment associated with the preset button.

In certain example, the media delivery system may operate to store the playback configuration adjustment at least until the PMSA enters the active state.

In certain example, the playback configuration adjustment includes at least one of playback setting adjustment, sound quality adjustment, notification setting adjustment, and advertisement setting adjustment.

In certain example, the media delivery system may operate to receive a media content request from the PMSA, determine media content based on the media content request, and transmit the media content to the PMSA for playback.

In certain example, the PMSA may include a media content output device configured to transmit the media content received from the media delivery system to a vehicle media playback system such that the vehicle media playback system plays the media content.

In certain example, the PMSA may include a power input device configured to electrically connected to a power source of the vehicle and receive electric power from the vehicle.

### BRIEF DESCRIPTION OF THE DRAWINGS

FIG. 1 illustrates an example system for streaming media content for playback.
FIG. 2 is a block diagram of an example embodiment of a personal media streaming appliance (PMSA) system.
FIG. 3 is a block diagram of an example embodiment of a media delivery system.
FIG. 4 is a block diagram of an example embodiment of a vehicle media playback system.
FIG. 5 is a block diagram of an example embodiment of a mobile computing device.
FIG. 6 schematically illustrates an example embodiment of the PMSA system.
FIG. 7 illustrates an example ecosystem for the PMSA system of FIG. 1.
FIG. 8 is a block diagram that illustrates an example remote appliance setting data.
FIG. 9 illustrates an example data structure that may appear in a database of a media delivery system.
FIG. 10 is a block diagram that illustrates an example data structure of local appliance setting data.
FIG. 11 is a communication flowchart that illustrates an example method for controlling one or more settings of the PMSA system using a computing device in the ecosystem.
FIG. 12 is a communication flowchart that illustrates another example method for controlling one or more settings of the PMSA system using a computing device in the ecosystem.
FIG. 13 schematically illustrates an example user interface at the computing device of FIG. 7.

### DETAILED DESCRIPTION

Various embodiments will be described in detail with reference to the drawings, wherein like reference numerals represent like parts and assemblies throughout the several views.

People spend a significant amount of time travelling in vehicles. Many of them find that time to be more enjoyable when they are listening to music, watching videos, or otherwise consuming media content. Media content includes audio and video content. Examples of audio content include songs, albums, playlists, radio stations, podcasts, audiobooks, and other audible media content items. Examples of video content include movies, music videos, television programs, and other visible media content items. In many cases, video content also includes audio content. As used herein, the term "vehicle" can be any machine that is operable to transport people or cargo. Vehicles can be motorized or non-motorized. Vehicles can be for public or private transport. Examples of vehicles include motor vehicles (e.g., cars, trucks, buses, and motorcycles), rail vehicles (e.g., trains, trams), tracked vehicles, watercraft (e.g., ships, boats), aircraft, human-powered vehicles (e.g., bicycles), wagons, and other transportation means. A user can drive a vehicle or ride in as a passenger for travelling. As used herein, the term "travel" and variants thereof refers to any activity in which a user is in transit between two locations.

In general, the present disclosure provides a special-purpose personal media streaming appliance (PMSA) that can be used for streaming media in a vehicle. The appliance is also referred to herein as the personal vehicle media streaming appliance (PVMSA). In some embodiments, the appliance is specially designed to be dedicated for media streaming purposes in a vehicle, and there is no other general use. Some embodiments of the appliance can operate to communicate directly with a media content server and receive streamed media content from the server via a cellular network. In these embodiments, other computing devices, such as mobile devices, are not involved in this direct communication between the appliance and the media content server. Mobile data cost can be included in the subscription of the media streaming service or a purchase price of the personal appliance. Therefore, the customer's possible concern about mobile data usage can be eliminated. In other embodiments, the appliance can connect to another computing device, such as a mobile device, that provides a mobile hotspot to enable the appliance to communicate with the media content server rather than the appliance communicating with it directly. For example, a mobile device is used to assist in communication between the appliance and the media content server.

Further, the appliance can be associated with a user account of the user for the media streaming service so that the user can enjoy personalized media content.

In some embodiments, the appliance provides a simplified user interface so that a user can easily control playback of media content in a vehicle while maintaining his or her focus on other tasks such as driving or navigating. For example, the appliance has a limited set of physical control elements that are intuitively controllable for playback of media content with little (often only one) input from a user. Examples of such physical control elements include a rotatable knob and one or more physically-depressible buttons.

Further, in some embodiments, the appliance is configured to be easily mounted to an interior structure of a vehicle, such as a dashboard, so that the user can easily reach the appliance.

In some embodiments, the appliance also provides an output interface that can be easily connected to a vehicle audio system, such as via an auxiliary input port, Bluetooth or a FM transmitter. Therefore, the media content streamed to the appliance can then be transmitted from the appliance to the vehicle audio system for playback in the vehicle.

In some embodiments, the appliance can include a voice interaction system designed for voice interaction with a user in the noisy environment of a vehicle. In some embodiments, the appliance includes multiple microphones that reduce the effects of ambient noise in the passenger area of the vehicle. In an example, the appliance includes at least three microphones: two directed to the passenger area of the vehicle and another facing away from the passenger area of the vehicle to pick up vibrations and low frequency noise for cancellation. The appliance also applies spectral noise cancellation to reduce non-voice frequencies. In addition, omni-directional noise cancellation is applied in some embodiments to reduce omni-directional sound (e.g., vehicle noise). Directional noise is detected by determining a difference between audio inputs detected by the two microphones facing the passenger area. The difference is preserved as directional audio input. The appliance further cancels out audio that it is currently playing, allowing the appliance to detect voice commands even over loud music, for instance. In this manner, the appliance is arranged to provide an improved voice-based interface in a vehicle environment.

Further, the present disclosure generally relates to an ecosystem for the personal media streaming appliance (PMSA). In some embodiments, the ecosystem includes the PMSA and one or more other computing devices that are in data communication with the PMSA via a data communication network. In some embodiments, the ecosystem can be configured to allow the PMSA to be remotely configurable using one or more of the other computing devices in the ecosystem.

In certain examples, the PMSA includes one or more preset buttons for conveniently playing media content assigned to the preset buttons. The preset buttons of the PMSA are configurable using another computing device, such as a mobile device, via a data communication network to which both of the PMSA and the computing device are connected. For example, the media content (e.g., a media context such as a playlist) that is associated with a preset button of the PMSA can be changed via a user interface provided on a computing device remote to the PMSA.

As described herein, consuming media content may include one or more of listening to audio content, watching video content, or consuming other types of media content. For ease of explanation, the embodiments described in this application are presented using specific examples. For example, audio content (and in particular music) is described as an example of one form of media consumption. As another example, a vehicle is described as an example of an environment in which media content is consumed. Further, traveling (and in particular driving) in a vehicle is described as an example of an activity during which media content is consumed. However, it should be understood that the same concepts are similarly applicable to other forms of media consumption and to other environments or activities, and at least some embodiments include other forms of media consumption and/or are configured for use in other environments or during other activities.

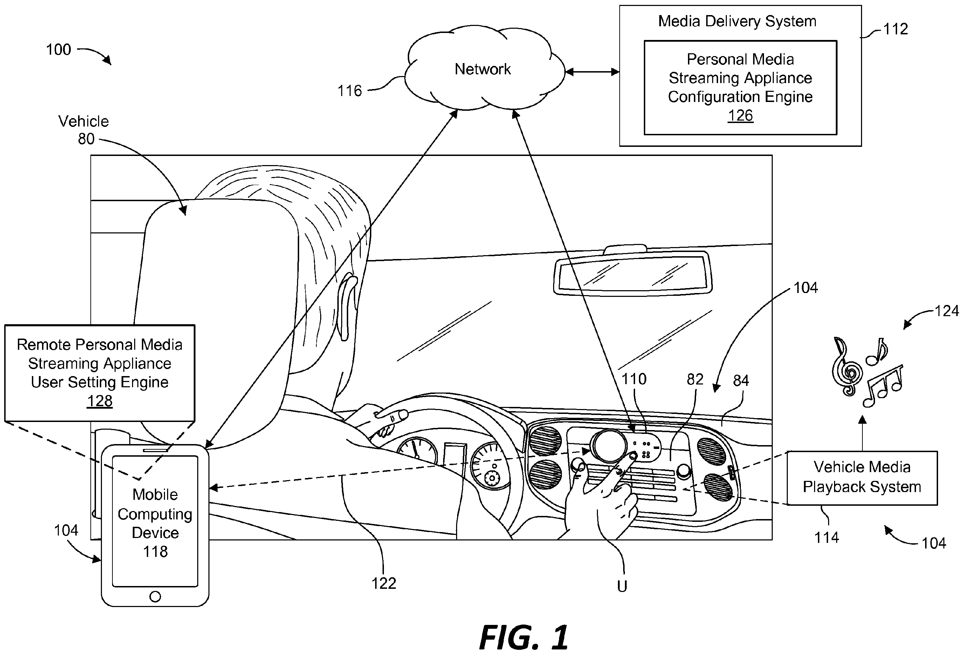

FIG. 1 illustrates an example system 100 for streaming media content for playback. The system 100 can be used in a vehicle 80. The vehicle 80 includes a dashboard 82 or a head unit 84. The system 100 includes one or more media playback devices 104 configured to play media content, such as a personal media streaming appliance (PMSA) system 110, a media delivery system 112, a vehicle media playback system 114, and a computing device 118. The system 100 further includes a data communication network 116 and an in-vehicle wireless data communication network 122. Further, the media delivery system 112 includes a PMSA configuration engine 126, and the computing device 118 includes a remote PMSA user setting engine 128.

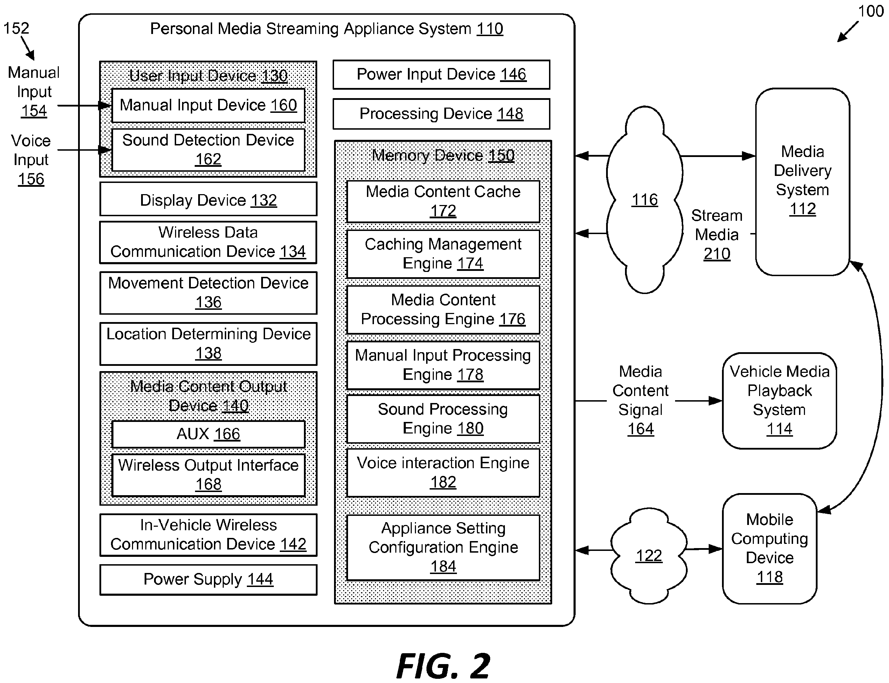

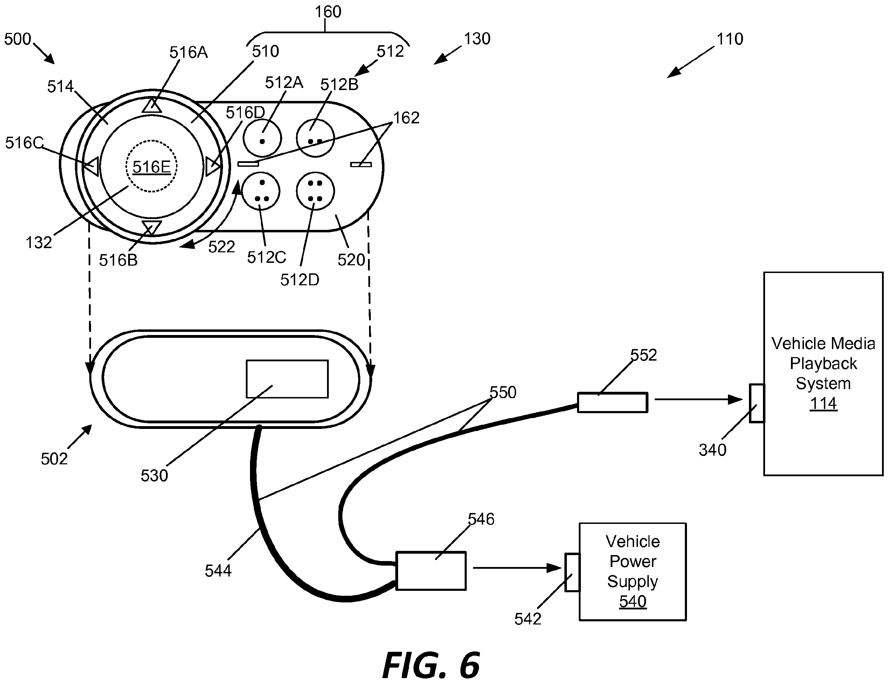

The PMSA system 110 operates to receive media content that is provided (e.g., streamed, transmitted, etc.) by a system external to the PMSA system 110, such as the media delivery system 112, and transmit the media content to the vehicle media playback system 114 for playback. In some embodiments, the PMSA system 110 is a portable device which can be carried into and used in the vehicle 80. The PMSA system 110 can be mounted to a structure of the vehicle 80, such as the dashboard 82 or the head unit 84. In other embodiments, the PMSA system 110 can be configured to be built in a structure of the vehicle 80. An example of the PMSA system 110 is illustrated and described in more detail with reference to FIGs. 2 and 6. In this document, the PMSA system 110 can be simply referred to as the personal media streaming appliance (PMSA) 110.

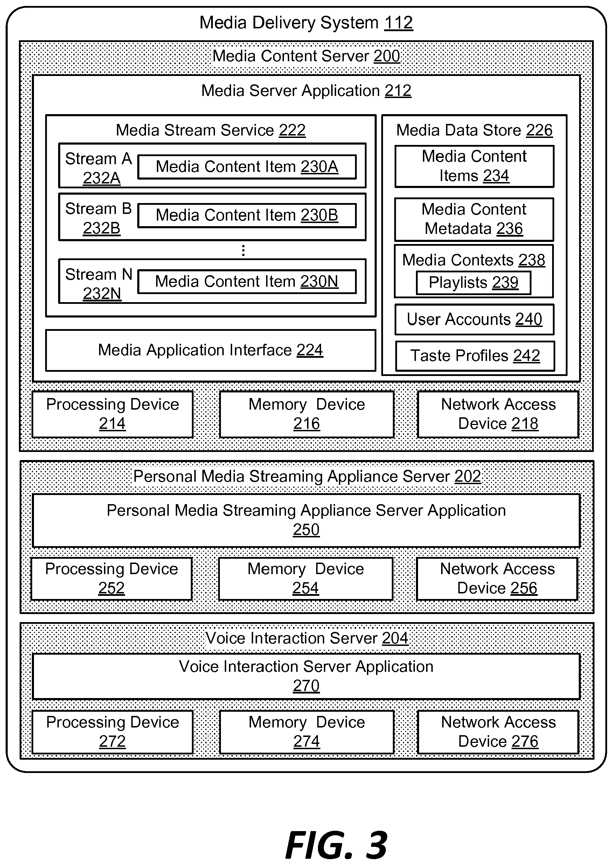

The media delivery system 112 operates to provide media content to one or more media playback devices 104 via the network 116. In the illustrated example, the media delivery system 112 provides media content to the PMSA system 110 for playback of media content using the vehicle media playback system 114. An example of the media delivery system 112 is illustrated and described in further detail herein, such as with reference to FIG. 3.

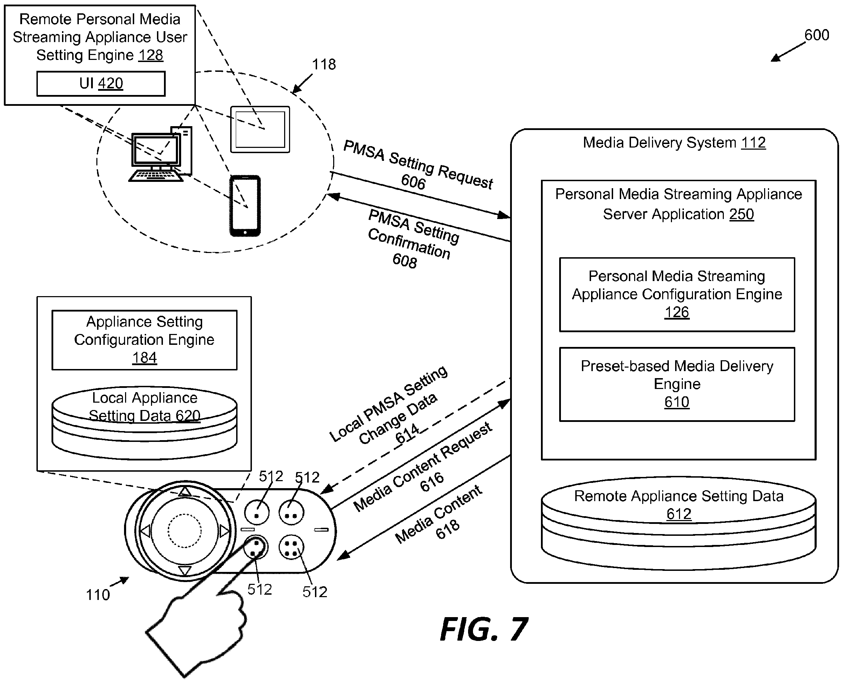

In some embodiments, the media delivery system 112 includes the PMSA configuration engine 126 that operates to configure one or more settings of the PMSA system 110. An example of the PMSA configuration engine 126 is illustrated and described in further detail herein, such as with reference to FIG. 7.

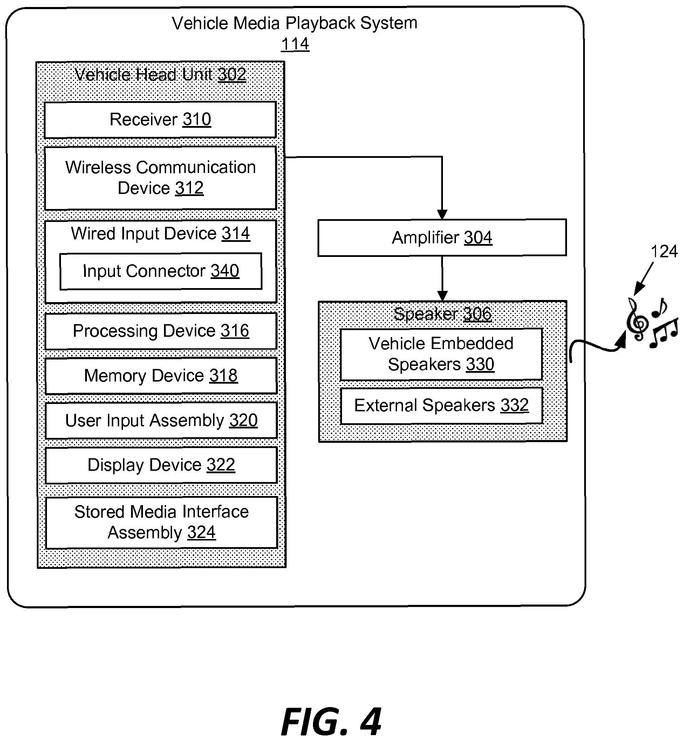

The vehicle media playback system 114 operates to receive media content from the PMSA system 110 and generates a media output 124 to play the media content in the vehicle 80. An example of the vehicle media playback system 114 is illustrated and described in further detail herein, such as with reference to FIG. 4.

The network 116 is a data communication network that facilitates data communication between the PMSA system 110 and the media delivery system 112. In some embodiments, the computing device 118 can also communicate with the media delivery system 112 across the network 116. The network 116 typically includes a set of computing devices and communication links between the computing devices. The computing devices in the network 116 use the links to enable communication among the computing devices in the network. The network 116 can include one or more routers, switches, mobile access points, bridges, hubs, intrusion detection devices, storage devices, standalone server devices, blade server devices, sensors, desktop computers, firewall devices, laptop computers, handheld computers, mobile telephones, vehicular computing devices, and other types of computing devices.

In various embodiments, the network 116 includes various types of communication links. For example, the network 116 can include wired and/or wireless links, including cellular, Bluetooth, ultra-wideband (UWB), 802.11, ZigBee, and other types of wireless links. Furthermore, in various embodiments, the network 116 is implemented at various scales. For example, the network 116 can be implemented as one or more vehicle area networks, local area networks (LANs), metropolitan area networks, subnets, wide area networks (WAN) (such as the Internet), or can be implemented at another scale. Further, in some embodiments, the network 116 includes multiple networks, which may be of the same type or of multiple different types.

In some embodiments, the network 116 can also be used for data communication between other media playback devices 104 (e.g., the computing device 118) and the media delivery system 112. Because the network 116 is configured primarily for data communication between computing devices in the vehicle 80 and computing devices outside the vehicle 80, the network 116 is also referred to herein as an out-of-vehicle network for out-of-vehicle data communication.

Unlike the network 116, the in-vehicle wireless data communication 122 can be used for direct data communication between computing devices (e.g., the media playback devices 104) in the vehicle 80. In some embodiments, the in-vehicle wireless data communication 122 is used for direct communication between the PMSA system 110 and the computing device 118. In other embodiments, the computing device 118 can communicate with the PMSA system 110 in the data communication network 116. In some embodiments, the in-vehicle wireless data communication 122 can also be used for data communication between the PMSA system 110 and the vehicle media playback system 114.

Various types of wireless communication interfaces can be used for the in-vehicle wireless data communication 122. In some embodiments, the in-vehicle wireless data communication 122 includes Bluetooth® technology. In other embodiments, the in-vehicle wireless data communication 122 includes Wi-Fi® technology. In yet other embodiments, other suitable wireless communication interfaces can be used for the in-vehicle wireless data communication 122, such as near field communication (NFC) and a ultrasonic data transmission.

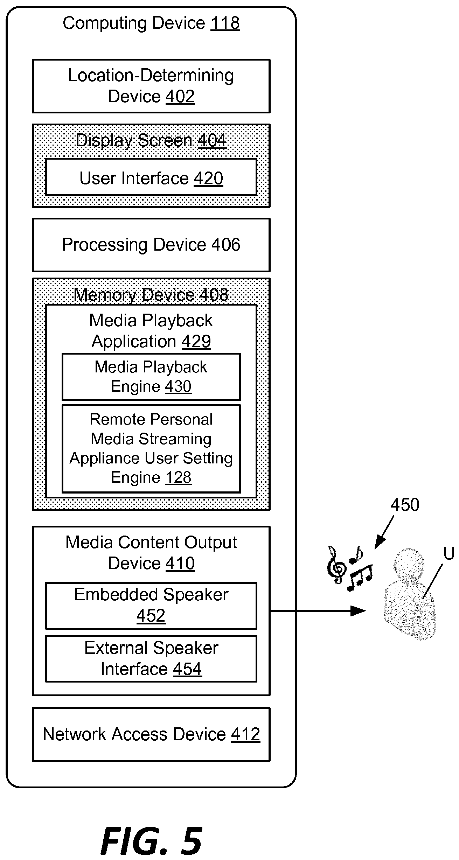

In some embodiments, the computing device 118 is configured to play media content independently from the PMSA system 110. In some embodiments, the computing device 118 is a standalone computing device that, without the PMSA system 110 involved, can communicate with the media delivery system 112 and receive media content from the media delivery system 112 for playback in the vehicle 80. An example of the computing device 118 is illustrated and described in further detail herein, such as with reference to FIG. 5.

In some embodiments, the computing device 118 is used to configure one or more settings of the PMSA system 110 remotely. As described herein, for example, the computing device 118 includes the remote PMSA user setting engine 128 that operates the computing device 118 to interact with the media delivery system 112 and control the settings of the PMSA system 110 via the network 116. An example of the remote PMSA user setting engine 128 is illustrated and described in further detail herein, such as with reference to FIG. 7.

FIG. 2 is a block diagram of an example embodiment of the PMSA system 110 of the media streaming system 100 shown in FIG. 1. In this example, the PMSA system 110 includes a user input device 130, a display device 132, a wireless data communication device 134, a movement detection device 136, a location determining device 138, a media content output device 140, an in-vehicle wireless communication device 142, a power supply 144, a power input device 146, a processing device 148, and a memory device 150.

In some embodiments, the PMSA system 110 is a system dedicated for streaming personalized media content in a vehicle environment. At least some embodiments of the PMSA system 110 have limited functionalities specifically selected for streaming media content from the media delivery system 112 at least via the network 116 and/or for providing other services associated with the media content streaming service. The PMSA system 110 may have no other general use such as found in other computing devices, such as smartphones, tablets, and other smart devices. For example, in some embodiments, when the PMSA system 110 is powered up, the PMSA system 110 is configured to automatically activate a software application that is configured to perform the media content streaming and media playback operations of the PMSA system 110 using at least one of the components, devices, and elements of the PMSA system 110. In some embodiments, the software application of the PMSA system 110 is configured to continue running until the PMSA system 110 is powered off or powered down to a predetermined level such that the PMSA is in a power saving mode. In some embodiments, the PMSA system 110 is configured to be free of any user interface control that would allow a user to disable the automatic activation of the software application on the PMSA system 110.

As described herein, the PMSA system 110 provides various structures, features, and functions that improve the user experience of consuming media content in a vehicle.

As illustrated, the PMSA system 110 can communicate with the media delivery system 112 to receive media content via the network 116 and enable the vehicle media playback system 114 to play the media content in the vehicle. In some embodiments, the PMSA system 110 can communicate with the computing device 118 that is in data communication with the media delivery system 112. As described herein, the computing device 118 can communicate with the media delivery system 112 via the network 116.

The user input device 130 operates to receive a user input 152 from a user U for controlling the PMSA system 110. As illustrated, the user input 152 can include a manual input 154 and a voice input 156. In some embodiments, the user input device 130 includes a manual input device 160 and a sound detection device 162.

The manual input device 160 operates to receive the manual input 154 for controlling playback of media content via the PMSA system 110. In addition, in some embodiments, the manual input 154 is received for managing various pieces of information transmitted via the PMSA system 110 and/or controlling other functions or aspects associated with the PMSA system 110.

In some embodiments, the manual input device 160 includes one or more manual control elements configured to receive various manual control actions, such as pressing actions and rotational actions. As described herein, the physical input device 160 includes a manual control knob 510 and one or more physical buttons 512, which is further illustrated and described with reference to FIG. 6.

The sound detection device 162 operates to detect and record sounds from proximate the PMSA system 110. For example, the sound detection device 162 can detect sounds including the voice input 156. In some embodiments, the sound detection device 162 includes one or more acoustic sensors configured to detect sounds proximate the PMSA system 110. For example, acoustic sensors of the sound detection device 162 includes one or more microphones. Various types of microphones can be used for the sound detection device 162 of the PMSA system 110.

In some embodiments, the voice input 156 is a user's voice (also referred to herein as an utterance) for controlling playback of media content via the PMSA system 110. In addition, the voice input 156 is a user's voice for managing various data transmitted via the PMSA system 110 and/or controlling other functions or aspects associated with the PMSA system 110.

In some embodiments, the sound detection device 162 is configured to cancel noises from the received sounds so that a desired sound (e.g., the voice input 156) is clearly identified. For example, the sound detection device 162 can include one or more noise-canceling microphones which are configured to filter ambient noise from the voice input 156. In addition or alternatively, a plurality of microphones of the sound detection device 162 are arranged at different locations in a body of the PMSA system 110 and/or oriented in different directions with respect to the body of the PMSA system 110, so that ambient noise is effectively canceled from the voice input 156 or other desired sounds being identified.

In some embodiments, the sounds detected by the sound detection device 162 can be processed by the sound processing engine 180 of the PMSA system 110 as described below.

Referring still to FIG. 2, the display device 132 operates to display information to the user U. Examples of such information include media content playback information, notifications, and other information.

In some embodiments, the display device 132 operates as a display screen only and is not capable of receiving a user input. For example, the PMSA 110 is free of a touch screen display, the PMSA 110 thereby being configured for use in a vehicle environment. By receiving the manual input 154 only via the manual input device 160 and disabling receipt of manual input via the display device 132, the user interface of the PMSA system 110 is simplified so that the user U can control the PMSA system 110 while maintaining focus on other activities in the vehicle 80. It is understood however that, in other embodiments, the display device 132 is configured as a touch-sensitive display screen that operates as both a display screen and a user input device. In yet other embodiments, the PMSA system 110 does not include a display device.

As described herein, in some embodiments, the display device 132 is arranged at the manual input device 160. In other embodiments, the display device 132 is arranged separate from the manual input device 160.

The wireless data communication device 134 operates to enable the PMSA system 110 to communicate with one or more computing devices at a remote location that is outside the vehicle 80. In the illustrated example, the wireless data communication device 134 operates to connect the PMSA system 110 to one or more networks outside the vehicle 80, such as the network 116. For example, the wireless data communication device 134 is configured to communicate with the media delivery system 112 and receive media content from the media delivery system 112 at least partially via the network 116. The wireless data communication device 134 can be a wireless network interface of various types which connects the PMSA system 110 to the network 116. Examples of the wireless data communication device 134 include wireless wide area network (WWAN) interfaces, which use mobile telecommunication cellular network technologies. Examples of cellular network technologies include LTE, WiMAX, UMTS, CDMA2000, GSM, cellular digital packet data (CDPD), and Mobitex. In some embodiments, the wireless data communication device 134 is configured as a cellular network interface to facilitate data communication between the PMSA system 110 and the media delivery system 112 over cellular network.

The movement detection device 136 can be used to detect movement of the PMSA system 110 and the vehicle 80. In some embodiments, the movement detection device 136 is configured to monitor one or more factors that are used to determine movement of the vehicle 80. The movement detection device 136 can include one or more sensors that are configured to detect movement, position, and/or orientation of the PMSA system 110. As an example, the movement detection device 136 is operable to determine an orientation of the PMSA system 110. The movement detection device 136 can detect changes in the determined orientation and interpret those changes as indicating movement of the PMSA system 110. In some embodiments, the movement detection device 136 includes an accelerometer. In other embodiments, the movement detection device 136 includes a gyroscope. Other sensors can also be used for the movement detection device 136, such as a magnetometer, a GPS receiver, an altimeter, an odometer, a speedometer, a shock detector, a vibration sensor, a proximity sensor, and an optical sensor (e.g., a light sensor, a camera, and an infrared sensor).

The location determining device 138 is a device that determines the location of the PMSA system 110. In some embodiments, the location determining device 138 uses one or more of Global Positioning System (GPS) technology (which may receive GPS signals), Global Navigation Satellite System (GLONASS), cellular triangulation technology, network-based location identification technology, Wi-Fi positioning systems technology, and combinations thereof.

The media content output device 140 is an interface that enables the PMSA system 110 to transmit media content to the vehicle media playback system 114. Some embodiments of the PMSA system 110 do not have a speaker and thus cannot play media content independently. In these embodiments, the PMSA system 110 is not regarded as a standalone device for playing media content. Instead, the PMSA system 110 transmits media content to another media playback device, such as the vehicle media playback system 114 to enable the other media playback device to play the media content, such as through the vehicle stereo system.

As illustrated, the PMSA system 110 (e.g., a media content processing engine 176 thereof in FIG. 2) can convert media content to a media content signal 164, the media content output device 140 transmits the media content signal 164 to the vehicle media playback system 114. The vehicle media playback system 114 can play the media content based on the media content signal 164. For example, the vehicle media playback system 114 operates to convert the media content signal 164 into a format that is readable by the vehicle media playback system 114 for playback.

In some embodiments, the media content output device 140 includes an auxiliary (AUX) output interface 166 and a wireless output interface 168.

The AUX output interface 166 is configured to connect the PMSA system 110 to the vehicle media playback system 114 via a cable (e.g., a media content output line 550 in FIG. 6) of the PMSA system 110. In some embodiments, as illustrated in FIG. 6, the media content output line 550 extending from the PMSA system 110 is connected to an input connector 340 (e.g., an auxiliary input jack or port) of the vehicle media playback system 114. As illustrated herein, the media content output line 550 can be of various types, such as an analog audio cable or a USB cable.

The wireless output interface 168 is configured to connect the PMSA system 110 to the vehicle media playback system 114 via a wireless communication protocol. In some embodiments, the wireless output interface 168 is configured for Bluetooth connection. In other embodiments, the wireless output interface 168 is configured for other types of wireless connection. In some embodiments, the wireless output interface 168 is incorporated into, or implemented with, the in-vehicle wireless communication device 142. For example, when the media content output device 140 wirelessly transmits media content to the vehicle media playback system 114, the in-vehicle wireless communication device 142 can be used to implement the wireless output interface 168 of the media content output device 140.

Referring still to FIG. 2, the in-vehicle wireless communication device 142 operates to establish a wireless data communication, such as the in-vehicle wireless data communication 122, between computing devices in a vehicle 80. In the illustrated example, the in-vehicle wireless communication device 142 is used to enable the PMSA system 110 to communicate with other computing devices, such as the computing device 118, in the vehicle 80. Various types of wireless communication interfaces can be used for the in-vehicle wireless communication device 142, such as Bluetooth technology®, Wi-Fi® technology, a near field communication (NFC), and a ultrasound data transmission. The in-vehicle wireless communication is also referred to herein as a short-range wireless communication.

The power supply 144 is included in the example PMSA system 110 and is configured to supply electric power to the PMSA system 110. In some embodiments, the power supply 144 includes at least one battery. The power supply 144 can be rechargeable. For example, the power supply 144 can be recharged using the power input device 146 that is connected to an external power supply. In some embodiments, the power supply 144 is included inside the PMSA system 110 and is not removable from the PMSA system 110. In other embodiments, the power supply 144 is removable by the user from the PMSA system 110.

The power input device 146 is configured to receive electric power to maintain activation of components of the PMSA system 110. As described herein, the power input device 146 is connected to a power source of the vehicle 80 (e.g., a vehicle power supply 540 in FIG. 6) and use the electric power from the vehicle 80 as a primary power source to maintain activation of the PMSA system 110 over an extended period of time, such as longer than several minutes.

The processing device 148, in some embodiments, comprises one or more central processing units (CPU). In other embodiments, the processing device 148 additionally or alternatively includes one or more digital signal processors, field-programmable gate arrays, or other electronic circuits.

The memory device 150 typically includes at least some form of computer-readable media. Computer readable media includes any available media that can be accessed by the PMSA system 110. By way of example, computer-readable media includes computer readable storage media and computer readable communication media.

Computer readable storage media includes volatile and nonvolatile, removable and non-removable media implemented in any device configured to store information such as computer readable instructions, data structures, program modules, or other data. Computer readable storage media includes, but is not limited to, random access memory, read only memory, electrically erasable programmable read only memory, flash memory and other memory technology, compact disc read only memory, blue ray discs, digital versatile discs or other optical storage, magnetic storage devices, or any other medium that can be used to store the desired information and that can be accessed by the PMSA system 110. In some embodiments, computer readable storage media is non-transitory computer readable storage media.

Computer readable communication media typically embodies computer readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, computer readable communication media includes wired media such as a wired network or direct-wired connection, and wireless media such as acoustic, radio frequency, infrared, and other wireless media. Combinations of any of the above are also included within the scope of computer readable media.

The memory device 150 operates to store data and instructions. In some embodiments, the memory device 150 stores instructions for a media content cache 172, a caching management engine 174, a media content processing engine 176, a manual input processing engine 178, a sound processing engine 180, a voice interaction engine 182, and an appliance setting configuration engine 184.

Some embodiments of the memory device 150 include the media content cache 172. The media content cache 172 stores media content items, such as media content items that have been received from the media delivery system 112. The media content items stored in the media content cache 172 may be stored in an encrypted or unencrypted format. In some embodiments, the media content cache 172 also stores metadata about media content items such as title, artist name, album name, length, genre, mood, era, etc. The media content cache 172 can further store playback information about the media content items and/or other information associated with the media content items.

The caching management engine 174 is configured to receive and cache media content in the media content cache 172 and manage the media content stored in the media content cache 172. In some embodiments, when media content is streamed from the media delivery system 112, the caching management engine 174 operates to cache at least a portion of the media content into the media content cache 172 so that at least a portion of the cached media content can be transmitted to the vehicle media playback system 114 for playback. In other embodiments, the caching management engine 174 operates to cache at least a portion of media content into the media content cache 172 while online so that the cached media content is retrieved for playback while the PMSA system 110 is offline. The caching can enable the PMSA system 110 to consume less energy and reduce overhead of multiple backend and on-device systems. Further, the caching can improve responsiveness and reduce latency in operating the PMSA system 110 and therefore provide better experience of consuming media content while driving or riding in vehicles.

The media content processing engine 176 is configured to process the media content that is received from the media delivery system 112, and generate the media content signal 164 usable for the vehicle media playback system 114 to play the media content. The media content signal 164 is transmitted to the vehicle media playback system 114 using the media content output device 140, and then decoded so that the vehicle media playback system 114 plays the media content in the vehicle 80.

The manual input processing engine 178 operates to receive the manual input 154 via the manual input device 160. In some embodiments, when the manual input device 160 is actuated (e.g., pressed or rotated) upon receiving the manual input 154, the manual input device 160 generates an electric signal representative of the manual input 154. The manual input processing engine 178 can process the electric signal and determine the user input (e.g., command or instruction) corresponding to the manual input 154 to the PMSA system 110. In some embodiments, the manual input processing engine 178 can perform a function requested by the manual input 154, such as controlling playback of media content. The manual input processing engine 178 can cause one or more other engines to perform the function associated with the manual input 154.

The sound processing engine 180 is configured to receive sound signals obtained from the sound detection device 162 and process the sound signals to identify different sources of the sounds received via the sound detection device 162. In some embodiments, the sound processing engine 180 operates to filter the user's voice input 156 from noises included in the detected sounds. Various noise cancellation technologies, such as active noise control or cancelling technologies or passive noise control or cancelling technologies, can be used to filter the voice input from ambient noise. In examples, the sound processing engine 180 filters out omni-directional noise and preserves directional noise (e.g., an audio input difference between two microphones) in audio input. In examples, the sound processing engine 180 removes frequencies above or below human speaking voice frequencies. In examples, the sound processing engine 180 subtracts audio output of the device from the audio input to filter out the audio content being provided by the device, (e.g., to reduce the need of the user to shout over playing music). In examples, the sound processing engine 180 performs echo cancellation. By using one or more of these techniques, the sound processing engine 180 provides sound processing customized for use in a vehicle environment.

In other embodiments, the sound processing engine 180 operates to process the received sound signals to identify the sources of particular sounds of the sound signals, such as people's conversation in the vehicle, the vehicle engine sound, or other ambient sounds associated with the vehicle.

In some embodiments, a recording of sounds captured using the sound detection device 162 can be analyzed using speech recognition technology to identify words spoken by the user. The words may be recognized as commands from the user that alter the playback of media content and/or other functions or aspect of the PMSA system 110. In some embodiments, the words and/or the recordings may also be analyzed using natural language processing and/or intent recognition technology to determine appropriate actions to take based on the spoken words. Additionally or alternatively, the sound processing engine 180 may determine various sound properties about the sounds proximate the PMSA system 110 such as volume, dominant frequency or frequencies, etc. These sound properties may be used to make inferences about the environment proximate to the PMSA system 110.

The voice interaction engine 182 operates to cooperate with the media delivery system 112 (e.g., a voice interaction server 204 thereof as illustrated in FIG. 3) to identify a command (e.g., a user intent) that is conveyed by the voice input 156. In some embodiments, the voice interaction engine 182 transmits the user's voice input 156 that is detected by the sound processing engine 180 to the media delivery system 112 so that the media delivery system 112 operates to determine a command intended by the voice input 156. In other embodiments, at least some of the determination process of the command can be performed locally by the voice interaction engine 182.

In addition, some embodiments of the voice interaction engine 182 can operate to cooperate with the media delivery system 112 (e.g., the voice interaction server 204 thereof) to provide a voice assistant that performs various voice-based interactions with the user, such as voice feedbacks, voice notifications, voice recommendations, and other voice-related interactions and services.

The appliance setting configuration engine 184 operates to configure one or more settings of the PMSA system 110. In some embodiments, the appliance setting configuration engine 184 operates the PMSA system 110 to interact with the media delivery system 112 (e.g., the PMSA configuration engine 126 thereof) and set up or change the settings of the PMSA system 110. In some embodiments, various settings of the PMSA system 110 can be set up or updated, such as preset setting, playback setting, sound quality setting, notification setting, advertisement setting, voice settings (e.g., verbosity options, such as brief, normal, or verbose), and other settings that may relate to media content playback. An example of the appliance setting configuration engine 184 is illustrated and described in further detail, such as with reference to FIG. 7.

FIG. 3 is a block diagram of an example embodiment of the media delivery system 112 of FIG. 1. The media delivery system 112 includes a media content server 200, a personal media streaming appliance (PMSA) server 202, and a voice interaction server 204.

The media delivery system 112 comprises one or more computing devices and provides media content to the PMSA system 110 and, in some embodiments, other media playback devices, such as the computing device 118, as well. In addition, the media delivery system 112 interacts with the PMSA system 110 to provide the PMSA system 110 with various functionalities.

In at least some embodiments, the media content server 200, the PMSA server 202, and the voice interaction server 204 are provided by separate computing devices. In other embodiments, the media content server 200, the PMSA server 202, and the voice interaction server 204 are provided by the same computing device(s). Further, in some embodiments, at least one of the media content server 200, the PMSA server 202, and the voice interaction server 204 is provided by multiple computing devices. For example, the media content server 200, the PMSA server 202, and the voice interaction server 204 may be provided by multiple redundant servers located in multiple geographic locations.

Although FIG. 3 shows a single media content server 200, a single PMSA server 202, and a single voice interaction server 204, some embodiments include multiple media servers, multiple PMSA servers, and/or multiple voice interaction servers. In these embodiments, each of the multiple media servers, multiple PMSA servers, and multiple voice interaction servers may be identical or similar to the media content server 200, the PMSA server 202, and the voice interaction server 204, respectively, as described herein, and may provide similar functionality with, for example, greater capacity and redundancy and/or services from multiple geographic locations. Alternatively, in these embodiments, some of the multiple media content servers, the multiple PMSA servers, and/or the multiple voice interaction servers may perform specialized functions to provide specialized services. Various combinations thereof are possible as well.

The media content server 200 transmits stream media 210 (FIG. 2) to media playback devices such as the PMSA system 110. In some embodiments, the media content server 200 includes a media server application 212, a processing device 214, a memory device 216, and a network access device 218. The processing device 214 and the memory device 216 may be similar to the processing device 148 and the memory device 150, respectively, which have each been previously described in connection with FIG. 2. Therefore, the description of the processing device 214 and the memory device 216 are omitted for brevity purposes.

The network access device 218 operates to communicate with other computing devices over one or more networks, such as the network 116. Examples of the network access device include one or more wired network interfaces and wireless network interfaces. Examples of such wireless network interfaces of the network access device 218 include wireless wide area network (WWAN) interfaces (including cellular networks) and wireless local area network (WLANs) interfaces. In other examples, other types of wireless interfaces can be used for the network access device 218.

In some embodiments, the media server application 212 is configured to stream media content, such as music or other audio, video, or other suitable forms of media content. The media server application 212 includes a media stream service 222, a media application interface 224, and a media data store 226. The media stream service 222 operates to buffer media content, such as media content items 230A, 230B, and 230N (collectively 230), for streaming to one or more streams 232A, 232B, and 232N (collectively 232).

The media application interface 224 can receive requests or other communication from media playback devices or other systems, such as the PMSA system 110, to retrieve media content items from the media content server 200. For example, in FIG. 3, the media application interface 224 receives communication from the PMSA system 110, such as the caching management engine 174 thereof, to receive media content from the media content server 200.

In some embodiments, the media data store 226 stores media content items 234, media content metadata 236, media contexts 238, user accounts 240, and taste profiles 242. The media data store 226 may comprise one or more databases and file systems. Other embodiments are possible as well.

As discussed herein, the media content items 234 (including the media content items 230) may be audio, video, or any other type of media content, which may be stored in any format for storing media content.

The media content metadata 236 provides various information associated with the media content items 234. In some embodiments, the media content metadata 236 includes one or more of title, artist name, album name, length, genre, mood, era, etc.

The media content metadata 236 operates to provide various pieces of information associated with the media content items 234. In some embodiments, the media content metadata 236 includes one or more of title, artist name, album name, length, genre, mood, era, etc.

In some embodiments, the media content metadata 236 includes acoustic metadata, cultural metadata, and explicit metadata. The acoustic metadata may be derived from analysis of the track and refers to a numerical or mathematical representation of the sound of a track. Acoustic metadata may include temporal information such as tempo, rhythm, beats, downbeats, tatums, patterns, sections, or other structures. Acoustic metadata may also include spectral information such as melody, pitch, harmony, timbre, chroma, loudness, vocalness, or other possible features. Acoustic metadata may take the form of one or more vectors, matrices, lists, tables, and other data structures. Acoustic metadata may be derived from analysis of the music signal. One form of acoustic metadata, commonly termed an acoustic fingerprint, may uniquely identify a specific track. Other forms of acoustic metadata may be formed by compressing the content of a track while retaining some or all of its musical characteristics.

The cultural metadata refers to text-based information describing listeners' reactions to a track or song, such as styles, genres, moods, themes, similar artists and/or songs, rankings, etc. Cultural metadata may be derived from expert opinion such as music reviews or classification of music into genres. Cultural metadata may be derived from listeners through websites, chatrooms, blogs, surveys, and the like. Cultural metadata may include sales data, shared collections, lists of favorite songs, and any text information that may be used to describe, rank, or interpret music. Cultural metadata may also be generated by a community of listeners and automatically retrieved from Internet sites, chat rooms, blogs, and the like. Cultural metadata may take the form of one or more vectors, matrices, lists, tables, and other data structures. A form of cultural metadata particularly useful for comparing music is a description vector. A description vector is a multi-dimensional vector associated with a track, album, or artist. Each term of the description vector indicates the probability that a corresponding word or phrase would be used to describe the associated track, album or artist.

The explicit metadata refers to factual or explicit information relating to music. Explicit metadata may include album and song titles, artist and composer names, other credits, album cover art, publisher name and product number, and other information. Explicit metadata is generally not derived from the music itself or from the reactions or opinions of listeners.

At least some of the metadata 236, such as explicit metadata (names, credits, product numbers, etc.) and cultural metadata (styles, genres, moods, themes, similar artists and/or songs, rankings, etc.), for a large library of songs or tracks can be evaluated and provided by one or more third party service providers. Acoustic and cultural metadata may take the form of parameters, lists, matrices, vectors, and other data structures. Acoustic and cultural metadata may be stored as XML files, for example, or any other appropriate file type. Explicit metadata may include numerical, text, pictorial, and other information. Explicit metadata may also be stored in an XML or other file. All or portions of the metadata may be stored in separate files associated with specific tracks. All or portions of the metadata, such as acoustic fingerprints and/or description vectors, may be stored in a searchable data structure, such as a k-D tree or other database format.

Referring still to FIG. 3, each of the media contexts 238 is used to identify one or more media content items 234. In some embodiments, the media contexts 238 are configured to group one or more media content items 234 and provide a particular context to the group of media content items 234. Some examples of the media contexts 238 include albums, artists, playlists, and individual media content items. By way of example, where a media context 238 is an album, the media context 238 can represent that the media content items 234 identified by the media context 238 are associated with that album.

As described above, the media contexts 238 can include playlists 239. The playlists 239 are used to identify one or more of the media content items 234. In some embodiments, the playlists 239 identify a group of the media content items 234 in a particular order. In other embodiments, the playlists 239 merely identify a group of the media content items 234 without specifying a particular order. Some, but not necessarily all, of the media content items 234 included in a particular one of the playlists 239 are associated with a characteristic such as a genre, mood, or era.

In some embodiments, a user can listen to media content items in a playlist 239 by selecting the playlist 239 via a media playback device 104, such as the PMSA system 110. The media playback device 104 then operates to communicate with the media delivery system 112 so that the media delivery system 112 retrieves the media content items identified by the playlist 239 and transmits data for the media content items to the media playback device 104 for playback.

In some embodiments, the playlist 239 includes a playlist title and a list of content media item identifiers. The playlist title is a title of the playlist, which can be provided by a user using the media playback device 104. The list of content media item identifiers includes one or more media content item identifiers (IDs) that refer to respective media content items 234.

Each media content item is identified by a media content item ID and includes various pieces of information, such as a media content item title, artist identification (e.g., individual artist name or group name, or multiple artist names or group names), and media content item data. In some embodiments, the media content item title and the artist ID are part of the media content metadata 236, which can further include other attributes of the media content item, such as album name, length, genre, mood, era, etc. as described herein.

At least some of the playlists 239 may include user-created playlists. For example, a user of a media streaming service provided using the media delivery system 112 can create a playlist 239 and edit the playlist 239 by adding, removing, and rearranging media content items in the playlist 239. A playlist 239 can be created and/or edited by a group of users together to make it a collaborative playlist. In some embodiments, user-created playlists can be available to a particular user only, a group of users, or to the public based on a user-definable privacy setting.

In some embodiments, when a playlist is created by a user or a group of users, the media delivery system 112 operates to generate a list of media content items recommended for the particular user or the particular group of users. In some embodiments, such recommended media content items can be selected based at least on the taste profiles 242 as described herein. Other information or factors can be used to determine the recommended media content items. Examples of determining recommended media content items are described in U.S. Patent Application Serial No. 15/858,377, titled MEDIA CONTENT ITEM RECOMMENDATION SYSTEM, filed December 29, 2017.

In addition or alternatively, at least some of the playlists 239 are created by a media streaming service provider. For example, such provider-created playlists can be automatically created by the media delivery system 112. In some embodiments, a provider-created playlist can be customized to a particular user or a particular group of users. By way of example, a playlist for a particular user can be automatically created by the media delivery system 112 based on the user's listening history (e.g., the user's taste profile) and/or listening history of other users with similar tastes. In other embodiments, a provider-created playlist can be configured to be available for the public in general. Provider-created playlists can also be sharable with to other users.

The user accounts 240 are used to identify users of a media streaming service provided by the media delivery system 112. In some embodiments, a user account 240 allows a user to authenticate to the media delivery system 112 and enable the user to access resources (e.g., media content items, playlists, etc.) provided by the media delivery system 112. In some embodiments, the user can use different devices (e.g., the PMSA system 110 and the computing device 118) to log into the user account and access data associated with the user account in the media delivery system 112. User authentication information, such as a username, an email account information, a password, and other credentials, can be used for the user to log into his or her user account.

The taste profiles 242 contain records indicating media content tastes of users. A taste profile can be associated with a user and used to maintain an in-depth understanding of the music activity and preference of that user, enabling personalized recommendations, taste profiling and a wide range of social music applications. Libraries and wrappers can be accessed to create taste profiles from a media library of the user, social website activity and other specialized databases to mine music preferences.

In some embodiments, each taste profile 242 is a representation of musical activities, such as user preferences and historical information about the users' consumption of media content, and can include a wide range of information such as artist plays, song plays, skips, dates of listen by the user, songs per day, playlists, play counts, start/stop/skip data for portions of a song or album, contents of collections, user rankings, preferences, or other mentions received via a client device, or other media plays, such as websites visited, book titles, movies watched, playing activity during a movie or other presentations, ratings, or terms corresponding to the media, such as "comedy", etc.

In addition, the taste profiles 242 can include other information. For example, the taste profiles 242 can include libraries and/or playlists of media content items associated with the user. The taste profiles 242 can also include information about the user's relationships with other users (e.g., associations between users that are stored by the media delivery system 112 or on a separate social media site).

The taste profiles 242 can be used for a number of purposes. One use of taste profiles is for creating personalized playlists (e.g., personal playlisting). An API call associated with personal playlisting can be used to return a playlist customized to a particular user. For example, the media content items listed in the created playlist are constrained to the media content items in a taste profile associated with the particular user. Another example use case is for event recommendation. A taste profile can be created, for example, for a festival that contains all the artists in the festival. Music recommendations can be constrained to artists in the taste profile. Yet another use case is for personalized recommendation, where the contents of a taste profile are used to represent an individual's taste. This API call uses a taste profile as a seed for obtaining recommendations or playlists of similar artists. Yet another example taste profile use case is referred to as bulk resolution. A bulk resolution API call is used to resolve taste profile items to pre-stored identifiers associated with a service, such as a service that provides metadata about items associated with the taste profile (e.g., song tempo for a large catalog of items). Yet another example use case for taste profiles is referred to as user-to-user recommendation. This API call is used to discover users with similar tastes by comparing the similarity of taste profile item(s) associated with users.

A taste profile 242 can represent a single user or multiple users. Conversely, a single user or entity can have multiple taste profiles 242. For example, one taste profile can be generated in connection with a user's media content play activity, whereas another separate taste profile can be generated for the same user based the user's selection of media content items and/or artists for a playlist.

Referring still to FIG. 3, the PMSA server 202 operates to provide various functionalities to the PMSA system 110. In some embodiments, the PMSA server 202 includes a personal media streaming appliance (PMSA) server application 250, a processing device 252, a memory device 254, and a network access device 256. The processing device 252, the memory device 254, and the network access device 256 may be similar to the processing device 214, the memory device 216, and the network access device 218, respectively, which have each been previously described.

In some embodiments, the PMSA server application 250 operates to interact with the PMSA system 110 and enable the PMSA system 110 to perform various functions, such as receiving a user manual input, displaying information, providing notifications, performing power management, providing location-based services, and authenticating one or more users for the PMSA system 110. The PMSA server application 250 can interact with other servers, such as the media content server 200 and the voice interaction server 204, to execute such functions. An example of the PMSA server application 250 is illustrated and described in further detail herein, such as with reference to FIG. 7.

Referring still to FIG. 3, the voice interaction server 204 operates to provide various voice-related functionalities to the PMSA system 110. In some embodiments, the voice interaction server 204 includes a voice interaction server application 270, a processing device 272, a memory device 274, and a network access device 276. The processing device 272, the memory device 274, and the network access device 276 may be similar to the processing device 214, the memory device 216, and the network access device 218, respectively, which have each been previously described.

In some embodiments, the voice interaction server application 270 operates to interact with the PMSA system 110 and enable the PMSA system 110 to perform various voice-related functions, such as voice feedback and voice notifications. In some embodiments, the voice interaction server application 270 is configured to receive data (e.g., speech-to-text (STT) data) representative of a voice input received via the PMSA system 110 and process the data to determine a user command (e.g., a user request or instruction). In some embodiments, at least one of the media content server 200, the PMSA server 202, and the voice interaction server 204 may be used to perform one or more functions corresponding the determined user command.

FIG. 4 is a block diagram of an example embodiment of the vehicle media playback system 114. In this example, the vehicle media playback system 114 includes a vehicle head unit 302, an amplifier 304, and a speaker 306.

The vehicle head unit 302 is configured to receive a user input and generate media content from various sources. In this example, the vehicle head unit 302 includes a receiver 310, a wireless communication device 312, a wired input device 314, a processing device 316, a memory device 318, a user input assembly 320, a display device 322, and a stored media interface assembly 324.

The receiver 310 operates to receive media content signals from various external sources. The received signals can then be used to generate media output by the vehicle media playback system 264. Some embodiments of the receiver 310 include one or more tuners for receiving radio signals such as FM or AM radio signals. Other embodiments of the receiver 310 include a receiver for receiving satellite radio signals and/or a receiver for receiving internet radio signals.

The wireless communication device 312 operates to communicate with other devices using wireless data signals. The wireless communication device 312 can include one or more of a Bluetooth transceiver and a Wi-Fi transceiver. The wireless data signal may comprise a media content signal such as an audio or video signal. In some embodiments, the wireless communication device 312 is used to enable the vehicle media playback system 114 to wirelessly communicate with the PMSA system 110 and receive the media content signal 164 (FIG. 2) from the PMSA system 110 via an in-vehicle wireless network. The in-vehicle wireless network between the PMSA system 110 and the vehicle media playback system 114 can be configured similarly to the in-vehicle wireless data communication 122 (FIG. 2).

The wired input device 314 provides an interface configured to receive a cable for providing media content and/or commands. The wired input device 314 includes an input connector 340 configured to receive a plug extending from a media playback device for transmitting a signal for media content. In some embodiments, the wired input device 314 can include an auxiliary input jack (AUX) for receiving a plug from a media playback device that transmits analog audio signals. The wired input device 314 can also include different or multiple input jacks for receiving plugs from media playback devices that transmit other types of analog or digital signals (e.g., USB, HDMI, Composite Video, YPbPr, DVI). In some embodiments, the wired input device 314 is also used to receive instructions from other devices.

In some embodiments, the wired input device 314 provides the input connector 340 (e.g., an AUX port) for receiving a connector 552 extending from the PMSA system 110, as illustrated in FIG. 6. The media content signal 164 is then transmitted from the PMSA system 110 to the vehicle media playback system 114 via the cable 550, the connector 552, and the input connector 340.

The processing device 316 operates to control various devices, components, and elements of the vehicle media playback system 114. The processing device 316 can be configured similar to the processing device 148 (FIG. 2) and, therefore, the description of the processing device 316 is omitted for brevity purposes.

In some embodiments, the processing device 316 operates to process the media content signal 164 received from the PMSA system 110 and convert the signal 164 to a format readable by the vehicle media playback system 114 for playback.

The memory device 318 is configured to store data and instructions that are usable to control various devices, components, and elements of the vehicle media playback system 114. The memory device 318 can be configured similar to the memory device 150 (FIG. 2) and, therefore, the description of the memory device 318 is omitted for brevity purposes.

The user input assembly 320 includes one or more input devices for receiving user input from users for controlling the vehicle media playback system 114. In some embodiments, the user input assembly 320 includes multiple knobs, buttons, and other types of input controls for adjusting volume, selecting sources and content, and adjusting various output parameters. In some embodiments, the various input devices are disposed on or near a front surface of the vehicle head unit 302. The various input devices can also be disposed on the steering wheel of the vehicle or elsewhere. Additionally or alternatively, the user input assembly 320 can include one or more touch sensitive surfaces, which can be incorporated in the display device 322.

The display device 322 displays information. In some embodiments, the display device 322 includes a liquid crystal display (LCD) panel for displaying textual information about content and/or settings of the vehicle media playback system 114. The display device 322 can also include other types of display panels such as a light emitting diode (LED) panel. In some embodiments, the display device 322 can also display image or video content.

The stored media interface assembly 324 reads media content stored on a physical medium. In some embodiments, the stored media interface assembly 324 comprises one or more devices for reading media content from a physical medium such as a compact disc or cassette tape.

The amplifier 304 operates to amplify a signal received from the vehicle head unit 302 and transmits the amplified signal to the speaker 306. In this manner, the media output 124 can be played back at a greater volume. The amplifier 304 may include a power source to power the amplification.

The speaker 306 operates to produce an audio output (e.g., the media output 124) based on an electronic signal. The speaker 306 can include one or more vehicle embedded speakers 330 disposed at various locations within the vehicle 80. In some embodiments, separate signals are received for at least some of the speakers (e.g., to provide stereo or surround sound).

In other embodiments, the speaker 306 can include one or more external speakers 332 which are arranged within the vehicle 80. Users may bring one or more external speakers 332 into the vehicle 80 and connect the external speakers 332 to the vehicle head unit 302 using a wired interface or a wireless interface. In some embodiments, the external speakers 332 can be connected to the vehicle head unit 302 using Bluetooth. Other wireless protocols can be used to connect the external speakers 332 to the vehicle head unit 302. In other embodiments, a wired connection (e.g., a cable) can be used to connect the external speakers 332 to the vehicle head unit 302. Examples of the wired connection include an analog or digital audio cable connection and a universal serial bus (USB) cable connection. The external speaker 332 can also include a mechanical apparatus for attachment to a structure of the vehicle.

FIG. 5 is a block diagram of an example embodiment of the computing device 118 of FIG. 1.

Similar to the PMSA system 110, the computing device 118 can also be used to play media content. For example, the computing device 118 is configured to play media content that is provided (e.g., streamed or transmitted) by a system external to the computing device 118, such as the media delivery system 112, another system, or a peer device. In other examples, the computing device 118 operates to play media content stored locally on the computing device 118. In yet other examples, the computing device 118 operates to play media content that is stored locally as well as media content provided by other systems.

In some embodiments, the computing device 118 is a mobile device such as a handheld or portable entertainment device, smartphone, tablet, watch, wearable device, or any other type of computing device capable of playing media content. In other embodiments, the computing device 118 is a laptop computer, desktop computer, television, gaming console, set-top box, network appliance, blue-ray or DVD player, media player, stereo, or radio.

As described herein, the computing device 118 is distinguished from the PMSA system 110 in various aspects. For example, unlike the PMSA system 110, the computing device 118 is not limited to playing media content, but configured for a wide range of functionalities in various situations and places. The computing device 118 is capable of running a plurality of different software applications for different purposes. The computing device 118 enables the user to freely start or stop activation of such individual software applications.

In at least some embodiments, the computing device 118 includes a location-determining device 402, a display screen 404, a processing device 406, a memory device 408, a content output device 410, and a network access device 412. Other embodiments may include additional, different, or fewer components. For example, some embodiments may include a recording device such as a microphone or camera that operates to record audio or video content.

The location-determining device 402 is a device that determines the location of the computing device 118. In some embodiments, the location-determining device 402 uses one or more of Global Positioning System (GPS) technology (which may receive GPS signals), Global Navigation Satellite System (GLONASS), cellular triangulation technology, network-based location identification technology, Wi-Fi positioning systems technology, and combinations thereof.

The display screen 404 is configured to display information. In addition, the display screen 404 is configured as a touch sensitive display and includes a user interface 420 for receiving a user input from a selector (e.g., a finger, stylus etc.) controlled by the user U. In some embodiments, therefore, the display screen 404 operates as both a display device and a user input device. The touch sensitive display screen 404 operates to detect inputs based on one or both of touches and near-touches. In some embodiments, the display screen 404 displays a graphical user interface for interacting with the computing device 118. Other embodiments of the display screen 404 do not include a touch sensitive display screen. Some embodiments include a display device and one or more separate user interface devices. Further, some embodiments do not include a display device.

In some embodiments, the processing device 406 comprises one or more central processing units (CPU). In other embodiments, the processing device 406 additionally or alternatively includes one or more digital signal processors, field-programmable gate arrays, or other electronic circuits.

The memory device 408 operates to store data and instructions. In some embodiments, the memory device 408 stores a media playback application 429 which includes instructions for a media playback engine 430 and the remote PMSA user setting engine 128.

The memory device 408 may be configured similarly to the memory device 150 (FIG. 2) and, therefore, the description of the memory device 408 is omitted for brevity purposes.

The media playback engine 430 operates to play media content to the user U. As described herein, the media playback engine 430 is configured to communicate with the media delivery system 112 to receive one or more media content items (e.g., through the stream media 232). In other embodiments, the media playback engine 430 is configured to play media content that is locally stored in the computing device 118.

In some embodiments, the media playback engine 430 operates to retrieve one or more media content items that are either locally stored in the computing device 118 or remotely stored in the media delivery system 114. In some embodiments, the media playback engine 430 is configured to send a request to the media delivery system 114 for media content items and receive information about such media content items for playback.

As described herein, the remote PMSA user setting engine 128 operates to control settings of the PMSA system 110. In some embodiments. The remote PMSA user setting engine 128 operates the computing device 118 to communicate with the media delivery system 112 and set up or change the settings of the PMSA system 110 through the media delivery system 112 across the network 116. An example of the remote PMSA user setting engine 128 is illustrated and described in further detail herein, such as with reference to FIG. 7.

Referring still to FIG. 5, the content output device 410 operates to output media content. In some embodiments, the content output device 410 generates media output 450 for the user U. In some embodiments, the content output device 410 includes one or more embedded speakers 452 which are incorporated in the computing device 118. Therefore, the computing device 118 can be used as a standalone device that generates the media output 450.

In addition, some embodiments of the computing device 118 include an external speaker interface 454 as an alternative output of media content. The external speaker interface 454 is configured to connect the computing device 118 to another system having one or more speakers, such as headphones, portal speaker assemblies, and the vehicle media playback system 114, so that the media output 450 is generated via the speakers of the other system external to the computing device 118. Examples of the external speaker interface 454 include an audio output jack, a Bluetooth transmitter, a display panel, and a video output jack. Other embodiments are possible as well. For example, the external speaker interface 454 is configured to transmit a signal through the audio output jack or Bluetooth transmitter that can be used to reproduce an audio signal by a connected or paired device such as headphones or a speaker.

The network access device 412 operates to communicate with other computing devices over one or more networks, such as the network 116 and the in-vehicle wireless data communication 122. Examples of the network access device 412 include wired network interfaces and wireless network interfaces. Wireless network interfaces includes infrared, BLUETOOTH® wireless technology, 802.11a/b/g/n/ac, and cellular or other radio frequency interfaces in at least some possible embodiments.

FIG. 6 schematically illustrates an example embodiment of the PMSA system 110 of FIG. 1. In this example, the PMSA system 110 includes a personal media streaming appliance (PMSA) 500 and a docking device 502.

As described herein, the PMSA system 110 is sized so that the PMSA system 110 can be mounted to a structure (e.g., a dashboard or head unit) of the vehicle 80. When mounted to the structure of the vehicle 80, the PMSA system 110 can be manipulated by a user. By way of example, the PMSA system 110 is configured to be smaller than a typical mobile computing device, such as a smartphone. Further, the PMSA 500 provides a simplified user interface for controlling playback of media content. For example, the PMSA 500 has a limited set of physical control elements, such as a single rotary knob and one or more physical buttons as described below, so that the user can easily control the PMSA system 110 in the vehicle 80 (FIG. 1).

The PMSA 500 is configured to include at least some of the devices of the PMSA system 110 as illustrated with reference to FIG. 2. In some embodiments, the PMSA 500 includes all of the devices of the PMSA system 110 as illustrated in FIG. 2.

As illustrated also in FIG. 2, some embodiments of the PMSA 500 includes the user input device 130 that includes the manual input device 160 and the sound detection device 162. Some embodiments of the manual input device 160 include a control knob 510 and one or more physical buttons 512A, 512B, 512C, 512D (collectively 512). The control knob 510 has a knob face 514.

In some embodiments, the control knob 510 is configured to be maneuverable in multiple ways. In addition, the knob face 514 has a plurality of regions that are independently depressible. For example, each region can be depressed by a physical pressing action of a user against the knob face 514. In the illustrated example, the control knob 510 has five regions 516A, 516B, 516C, 516D, and 516E (collectively 516) (e.g., up, down, left, right, and middle, correspondingly) that are separately depressible. At least some of the regions 516 are associated with different user commands (e.g., requests or instructions). When a particular region is selected, the processor of the PMSA 500 executes a predetermined set of instructions. The predetermined set of instructions corresponds to the particular command associated with the selected region 516.

In other embodiments, the control knob 510 is configured to be manipulated in different ways, such as tilting in multiple directions or sliding in multiple directions.

In addition, the control knob 510 is configured to be rotatable. For example, the user can hold the control knob 510 and rotate it with respect to a body 520 of the PMSA 500. The control knob 510 can be rotatable in multiple directions 522 (e.g., clockwise and counterclockwise). In other embodiments, the control knob 510 is configured to rotate in only one direction.

In some embodiments, the control knob 510 is constructed to receive user inputs to control playback of media content. In addition or alternatively, the control knob 510 is constructed to receive user inputs for other purposes or functions.

The physical buttons 512 are configured to be depressed upon receiving a user's pressing action against the physical buttons 512. In the illustrated example, the PMSA 500 has four physical buttons 512A-512D. In some embodiments, each of the physical buttons 512 is configured to receive a single user command. In other embodiments, at least one of the physical buttons 512 is configured to receive multiple user commands.

In some embodiments, the physical buttons 512 are used as buttons that are preset to be associated with particular media content, thereby facilitating playback of such media content. In these embodiments, the physical buttons 512 are also referred to as preset buttons 512. In other embodiments, the physical buttons 512 can be used for non-content related actions. By way of example, the physical buttons 512 can be used for playback control actions, such as playback mode (e.g., shuffle, repeat, normal, etc.), playback speed (e.g., normal, slower, faster, etc.), crossfade (e.g., crossfade length), equalizer settings, audio normalization, and other possible settings relating to media content playback. Further, the physical buttons 512 can be used to connect the PMSA system 110 with other devices, such as the computing device 118.

It should be understood that physical buttons 512 can be any known or future developed component that is used to provide an activation signal to a processing device. For example physical buttons 512 can be mechanical button switches, conductive button switches, or capacitive button switches.

In addition, the PMSA 500 also includes the display screen 132. In some embodiments, the display screen 132 is arranged on the knob face 514 of the control knob 510. As described herein, in some embodiments, the display screen 132 does not include a touch sensitive display screen, and is configured as a display device only. In other embodiments, however, the display screen 132 can be configured to be touch sensitive and receive a user input through the display screen 132.

Referring still to FIG. 6, the docking device 502 is configured to mount the PMSA 500 to a structure of the vehicle 80. The docking device 502 is constructed to removably mount the PMSA 500 thereto. The docking device 502 is further constructed to attach to a structure of the vehicle 80 (FIG. 1) so that the PMSA 500 is positioned at the structure of the vehicle 80.

In some embodiments, an interface between the PMSA 500 and the docking device 502 is configured to prevent the PMSA 500 from rotating relative to the docking device 502 when the control knob 510 is manipulated by a user. For example, the docking device 502 has a portion (e.g., a front portion of the docking device 502) configured to interlock a corresponding portion of the PMSA 500 (e.g., a rear portion of the PMSA 500) when the PMSA 500 is mounted to the docking device 502 such that the portion of the docking device 502 and the corresponding portion of the PMSA 500 form the interface therebetween.

In addition or alternatively, the PMSA 500 and the docking device 502 include magnetic materials at the interface therebetween so that the PMSA 500 and the docking device 502 are magnetically coupled to each other.

In some embodiments, the docking device 502 includes one or more electrical contacts 530 that are electrically connected to corresponding electrical contacts (not shown in FIG. 6) of the PMSA 500 when the PMSA 500 is mounted to the docking device 502. Such electrical connection between the PMSA 500 and the docking device 502 is provided for various functions.

In some embodiments, the PMSA 500 does not include a battery sufficient for a prolonged use without an external power supply. The PMSA 500 can be primarily powered by a vehicle power supply 540. In some embodiments, the docking device 502 has a power receiving line 544 for connection to the vehicle power supply 540. For example, the power receiving line 544 extends from the docking device 502 and has a power connector 546 at a free end that is configured to mate with a vehicle power outlet 542 (e.g., a 12V auxiliary power outlet) of the vehicle power supply 540. As such, the docking device 502 receives electric power from the vehicle power supply 540 via the power receiving line 544, and the electrical connection between the PMSA 500 and the docking device 502 is configured to deliver electric power from the docking device 502 to the PMSA 500.

In some embodiments, the PMSA 500 does not have a speaker and is designed to transmit media content signals to the vehicle media playback system 114 so that the media content is played through the vehicle media playback system 114. The docking device 502 can include a media content output line 550 (also referred to herein as a media content output cable) (e.g., an auxiliary (AUX) output) configured to connect with the vehicle media playback input connector 340 (e.g., an auxiliary (AUX) port) of the vehicle media playback system 114. The docking device 502 is configured to receive media content signals from the PMSA 500 via the electrical connection between the PMSA 500 and the docking device 502, and transmit the signals to the vehicle media playback system 114 via the media content output line 550. In the illustrated embodiment, the power receiving line 544 and the media content output line 550 are combined to be a single line extending from the docking device 502 until the power connector 546, and the media content output line 550 further extends (or branches out) from the power connector 546 and terminates at a media output connector 552. The media output connector 552 is configured to connect to the vehicle media playback input connector 340 of the vehicle media playback system 114. In other embodiments, the media content output line 550 and the power receiving line 544 extend separately from the docking device 502.

In other embodiments, one or more of the power receiving line 544 and the media content output line 550 are directly connected to, and extend from, the PMSA 500 so that electric power is directly supplied to the PMSA 500 without the docking device 502 involved, and that the media content is directly transmitted to the vehicle media playback system 114 without passing through the docking device 502.

In some embodiments, the electrical connection between the PMSA 500 and the docking device 502 can be used to detect connection between the PMSA 500 and the docking device 502.

FIG. 7 illustrates an example ecosystem 600 for the PMSA system 110 of FIG. 1. In some embodiments, the ecosystem 600 is implemented at least in part with the system 100 as illustrated and described in FIG. 1. For example, the ecosystem 600 includes the PMSA system 110, the media delivery system 112, and one or more computing devices 118. As described herein, the PMSA system 110, the media delivery system 112, and the computing devices 118 can be in data communication via the data communication network 116 as illustrated in FIG. 1.

In some embodiments, the ecosystem 600 is configured to make the PMSA system 110 remotely configurable. For example, the PMSA system 110 has one or more settings which are user-configurable. The ecosystem 600 is configured such that the settings of the PMSA system 110 can be controlled using at least one of the computing devices 118 remote from the PMSA system 110. As explained above, physical buttons 512 can also be referred to as preset buttons 512. By way of example, the PMSA system 110 includes one or more preset buttons 512 for controlling playback of corresponding media content associated with the preset buttons 512. The preset buttons 512 of the PMSA system 110 are configurable using another computing device, such as the computing device 118, via the network 116 to which both of the PMSA system 110 and the computing device 118 are connected.

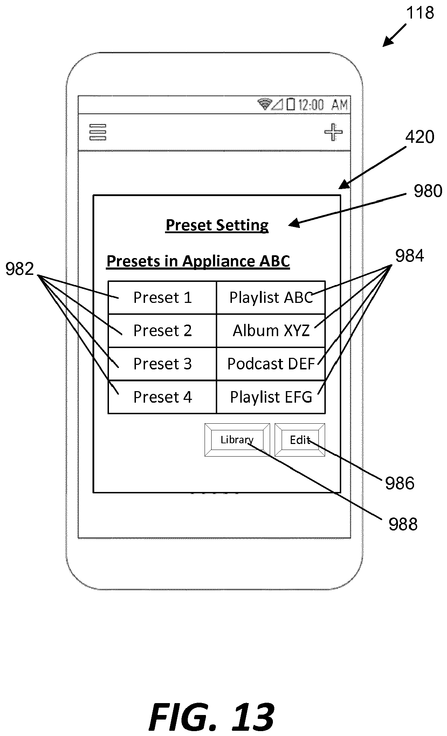

The computing device 118 includes the remote PMSA user setting engine 128 as described with reference to FIGs. 1 and 5. In some embodiments, the remote PMSA user setting engine 128 operates to provide the user interface 420 for receiving a user input of controlling the settings of the PMSA system 110. In some embodiments, the user interface 420 includes a graphical user interface provided on the display screen 404 (FIG. 5) of the computing device 118 and configured to receive a user input of setting up or modifying the settings of the PMSA system 110. An example of the user interface 420 is described and illustrated in more detail herein, such as with reference to FIG. 13.

Once the user input is received, the remote PMSA user setting engine 128 can operate to generate a PMSA setting request 606 and transmit the request 606 to the media delivery system 112. The PMSA setting request 606 can include information that identifies the PMSA system 110 (e.g., a device identifier for identifying the PMSA system 110), and information about one or more settings of the PMSA system 110 that is to be configured based on the user input. In examples of adjusting a preset setting of the PMSA system 110, the PMSA setting request 606 is also referred to herein as a preset adjustment, preset adjustment signal, a playback configuration adjustment, or the like. In these examples, the preset adjustment signal includes a preset identifier for identifying a preset button being adjusted. In addition, the preset adjustment signal further includes preset adjustment information that indicates how the preset button setting is adjusted (e.g., assigning a new media context to the preset button).

In some embodiments, the remote PMSA user setting engine 128 can receive a setting confirmation 608 from the media delivery system 112 after the settings of the PMSA system 110 have been controlled (e.g., set up or modified) as requested. The setting confirmation 608 is used to generate and present a notification to the user that confirm that the settings of the PMSA system 110 has been controlled as requested. Such a notification can be of various types, such as a visible message, code, icon, or symbol, or an audible sound or message.

Referring still to FIG. 7, the media delivery system 112 includes the PMSA server application 250 (as described also in FIG. 3) and remote appliance setting data 612. The PMSA server application 250 can include the PMSA configuration engine 126 (as described in FIG. 1) and a preset-based media delivery engine 610.

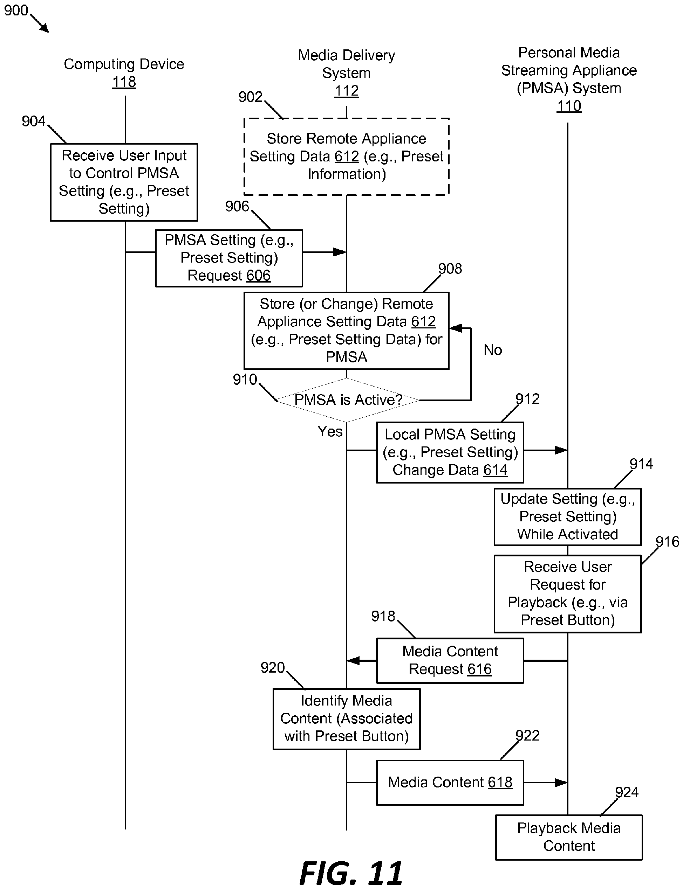

In some embodiments, the PMSA configuration engine 126 operates to receive the PMSA setting request 606 from the computing device 118 and control the settings of the PMSA system 110 based on the PMSA setting request 606. In some embodiments, the media delivery system 112 can communicate with the PMSA system 110 to control the settings of the PMSA system 110. In these embodiments, the media delivery system 112 can operate to generate and transmit local PMSA setting change data 614 to the PMSA system 110. The local PMSA setting change data 614 can be used by the PMSA system 110 to set the settings of the PMSA system 110 locally. In some embodiments, the local PMSA setting change data 614 is also referred to as an updated setting, an updated setting signal, or the like. An example of these embodiments is illustrated and described with reference to FIG. 11.

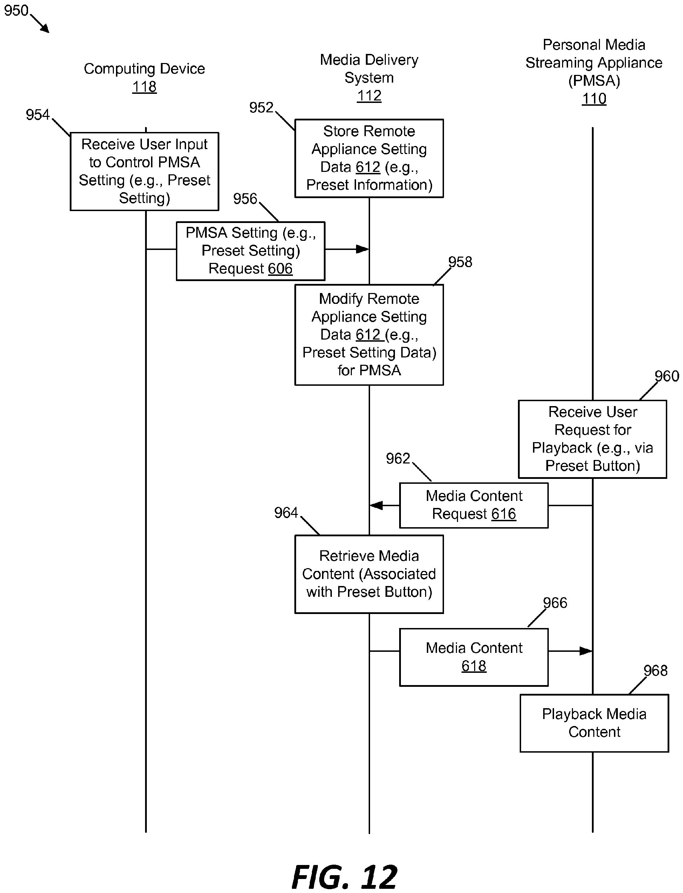

In other embodiments, the media delivery system 112 can control the settings of the PMSA system 110 without interacting with the PMSA system 110. An example of such other embodiments is illustrated and described with reference to FIG. 12.

The preset-based media delivery engine 610 of the media delivery system 112 operates to determine media content associated with one or more of the preset buttons 512 of the PMSA system 110. In some embodiments, the preset-based media delivery engine 610 operates to receive a media content request 616 from the PMSA system 110 and determine media content based on the media content request 616. In some embodiments, the media content request 616 is generated at the PMSA system 110 upon receiving a user input of selecting a preset button 512. In these embodiments, the preset button 512 is regarded as a preset signal source or the like, and the media content request 616 from the PMSA system 110 can be referred to as a preset signal or the like. As described herein, the preset signal is generated upon actuation of the preset button 512 of the PMSA system 110. The media content request 616 can include information that identifies the preset button 512 selected at the PMSA system 110, and is used by the media delivery system 112 to determine media content associated with the preset button 512.

When the media delivery system 112 identifies the media content based on the media content request 616, the media delivery system 112 transmits the media content 618 to the PMSA system 110 for playback. The media content 618 can be transmitted to the PMSA system 110 in the form of streaming, such as the stream media 210 (FIG. 2).

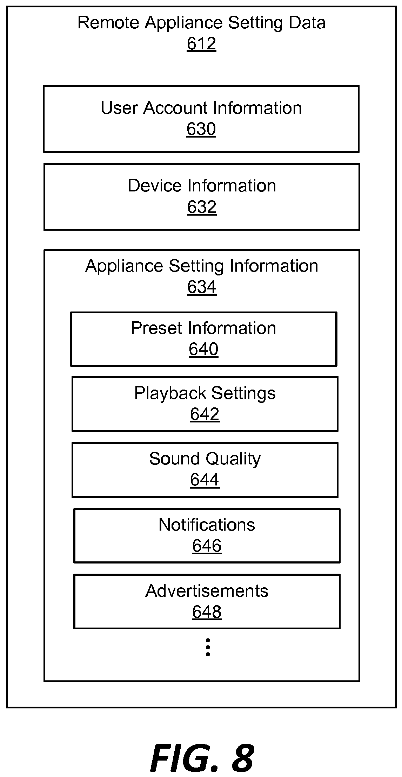

In some embodiments, the media delivery system 112 can store the remote appliance setting data 612. The remote appliance setting data 612 include data about the settings of the PMSA system 110. In some embodiments, the remote appliance setting data 612 can be modified in the media delivery system 112 based on the PMSA setting request 606 from the computing device 118. In these embodiments, the PMSA system 110 can operate according to the modified remote appliance setting data 612 in the media delivery system 112. For example, the media delivery system 112 can refer to the settings of a particular PMSA system 110 from the remote appliance setting data 612 and provide media content to that PMSA system 110 based on the identified settings. An example of the remote appliance setting data 612 is illustrated and described in further detail herein, such as with reference to FIG. 8.

Referring still to FIG. 7, the PMSA system 110 includes the appliance setting configuration engine 184 (as described also in FIG. 2) and local appliance setting data 620.

As described herein, the appliance setting configuration engine 184 operates to control the settings of the PMSA system 110. In some embodiments, the appliance setting configuration engine 184 operates to receive the local PMSA setting change data 614 from the media delivery system 112 and control (e.g., set up or modify) the settings of the PMSA system 110 based on the local PMSA setting change data 614.

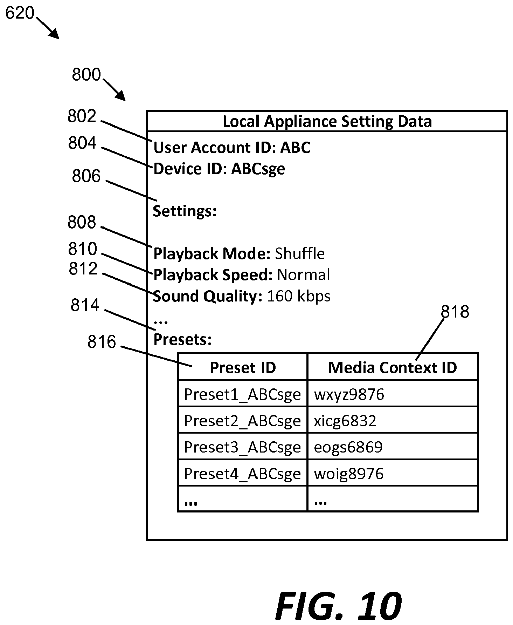

In some embodiments, the PMSA system 110 stores the local appliance setting data 620. The local appliance setting data 620 can include data about one or more settings of the PMSA system 110 and can be modified locally based on the local PMSA setting change data 614. In these embodiments, the PMSA system 110 can operate according to the modified local appliance setting data 620. An example of the local appliance setting data 620 is illustrated and described in further detail herein, such as with reference to FIG. 10.

FIG. 8 is a block diagram that illustrates an example of the remote appliance setting data 612 of FIG. 7. In some embodiments, the remote appliance setting data 612 include user account information 630, device information 632, and appliance setting information 634.

The remote appliance setting data 612 include information of the PMSA system 110. In some embodiments, the remote appliance setting data 612 include information of a plurality of PMSA systems 110 and can be used by the media delivery system 112 to control the plurality of PMSA systems 110. In other embodiments, the remote appliance setting data 612 can be dedicated to a single PMSA system 110 or a limited group of PMSA systems 110.

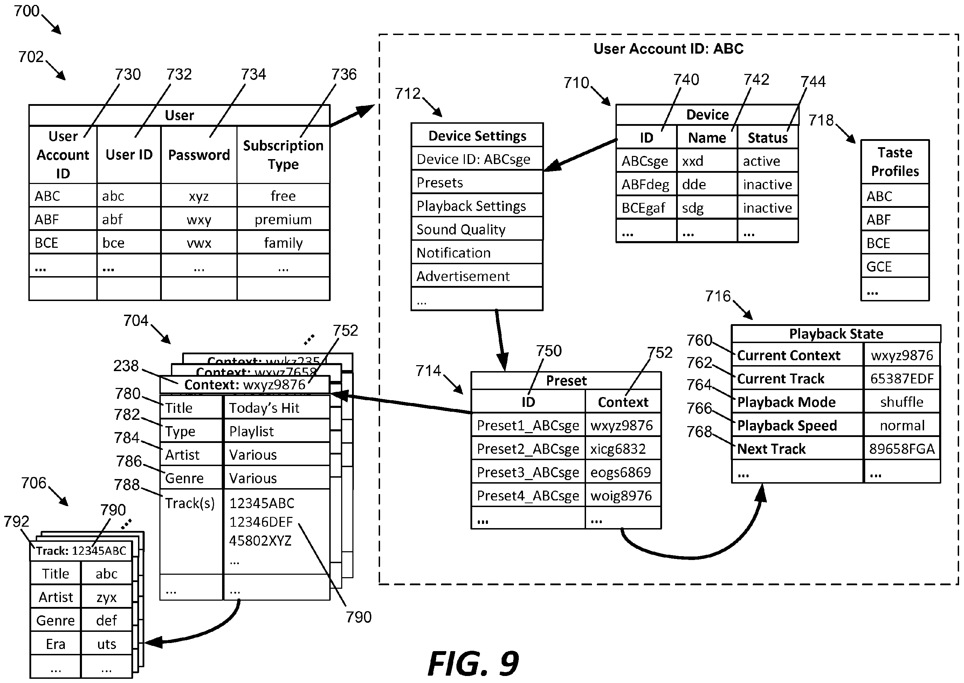

The user account information 630 includes information that identifies user accounts that are associated with PMSA systems 110, respectively. In some embodiments, the user account information 630 includes user account identifiers for identifying the user accounts that match the respective PMSA systems 110. A user account identifier can be a string of numbers and/or letters that identify a user account. An example of the user account information 630 is illustrated and described in more detail with reference to FIG. 9.

In some embodiments, when the media delivery system 112 receives the PMSA setting request 606, the media delivery system 112 can retrieve the user account information 630 and determine a user account that matches the PMSA setting request 606. For example, the PMSA setting request 606 can include a user account identifier that identifies a user account associated with the PMSA system 110, and the media delivery system 112 can process the PMSA setting request 606 and look up the user account information 630 to determine which user account in the user account information 630 is associated with the PMSA system 110.

The device information 632 includes information that identifies one or more PMSA systems 110. In some embodiments, the device information 632 includes device identifiers for identifying PMSA systems 110. A device identifier can be a string of numbers and/or letters that identify a PMSA system. An example of the device information 632 is illustrated and described in more detail with reference to FIG. 9.

In some embodiments, when the media delivery system 112 receives the PMSA setting request 606, the media delivery system 112 can retrieve the device information 632 and determine a device identifier that matches the PMSA setting request 606. For example, the PMSA setting request 606 can include a device identifier that identifies the PMSA system 110, and the media delivery system 112 can process the PMSA setting request 606 and look up the device information 632 to determine which PMSA system matches the device identifier included in the PMSA setting request 606.

The appliance setting information 634 includes information about one or more settings of PMSA systems 110. Examples of the settings of PMSA systems 110 include preset information 640, playback settings 642, sound quality settings 644, notification settings 646, advertisement settings 648, and other settings for controlling operation of the PMSA systems 110 or media content playback via the PMSA systems 110.

The preset information 640 includes information about the preset buttons 512 of the PMSA systems 110, such as preset identifiers that identify the preset buttons 512. A preset identifier can be a string of numbers and/or letters that identify a preset button. In some embodiments, the preset information 640 further includes media content that is associated with the preset buttons 512. An example of the preset information 640 is illustrated and described in more detail with reference to FIG. 9.

The playback settings 642 include various settings for media content playback, such as playback mode (e.g., shuffle, repeat, normal, etc.), playback speed (e.g., normal, slower, faster, etc.), crossfade (e.g., crossfade length), equalizer settings, audio normalization, and other possible settings relating to media content playback.

The sound quality settings 644 include information about sound quality, such as streaming quality (e.g., low (about 96 kbps), normal (about 160 kbps), high (about 320 kbps), etc.) and download quality (e.g. normal, high, extreme, etc.). In other embodiments, the sound quality settings 644 can include information about media format settings, such as AAC, VORBIS, etc.

The notification settings 646 include information about notification content (e.g., recommended music, new music, playlist updates, concert notifications, artist update, product news, service news and offers, etc.), notification type (e.g., push notification, email notification, voice notification, etc.), and any other settings relating to notifications.

The advertisement settings 648 include information about advertisement content, advertisement provider, advertisement type, and any other settings relating to advertisement.

FIG. 9 illustrates an example data structure that may appear in a database of the media delivery system 112. In this embodiment, the data in the media delivery system 112 may be represented with a plurality of tables which identifies a rational nature of the database according to the embodiment of the present disclosure. However, in alternative embodiments, the data stored in the media delivery system 112 may also be implemented using other database models.

In the illustrated example, the data structure 700 includes a user account table 702, a media context table 704, and a media content item table 706. For each user account, the data structure 700 includes a device data table 710, a device setting table 712, a preset table 714, a playback state table 716, and a taste profile table 718.

The user account table 702 can be configured to include data usable to identify users of the media delivery system 112 (e.g., a media content provider or a media streaming service). In some embodiments, the user account table 702 can be used to store and identify the user accounts 240 as described with reference to FIG. 3. In some embodiments, the user account table 702 can reference one or more other tables, and/or be referenced by one or more other tables. Some embodiments of the user account table 702 can contain a field for user account identifiers (IDs) 730, a field for user identifiers (IDs) 732, a field for passwords 734, and a field for subscription types 736. The user account ID field identifies a plurality of user account IDs 730 associated with the users of the media delivery system 112. The user ID field identifies user IDs 732 associated with the user accounts. The user IDs 732 include names or other identification information that the users can use to identify themselves in the service provided by the media delivery system 112. The user IDs 732 can be set up by the users or automatically assigned to the users. The password field identifies passwords 734 associated with the user accounts. The subscription type field identifies subscription types 736 associated with the user accounts. Examples of the subscription types 736 include a free subscription and a fee-based subscription with a single tier or with multiple tiers. Such a fee-based subscription can provide services that the free subscription does not provide.

In other embodiments, the user account table 702 can contain additional fields for other information about user, such as biographical information (e.g., address, contact information, age, gender, birth date/year, family, relationships, work, education, etc.). It is noted that, where user data is used, it can be handled according to a defined user privacy policy and can be used to the extent allowed by the user. Where the data of other users is used, it can be handled in an anonymized matter so the user does not learn of the details of other users generally or specifically.

Referring still to FIG. 9, each user account that can be identified in the user account table 702 is associated with, and identifies, a set of data for providing various services from the media delivery system 112. In some embodiments, such a set of data includes a device data table 710, a device setting table 712, a preset table 714, a playback state table 716, and a taste profile table 718. In the illustrated example, the tables 710, 712, 714, 716, and 718 are primarily described to be associated with a single user account (e.g., User Account ID: ABC). However, it is understood that, in other embodiments, the tables 710, 712, 714, 716, and 718 can be structured to be associated with a plurality of user accounts

The device data table 710 identifies one or more devices associated with a particular user account (e.g., User Account ID: ABC in FIG. 9). In some embodiments, the device data table 710 can be referenced by the user account table 702. Other tables can reference the device data table 710. The device data table 710 can also reference one or more other tables. The device data table 710 can contain a field for device identifiers (IDs) 740, a field for device names 742, and a field for device status 744. The device ID field includes one or more device IDs 740 of one or more media playback devices 104 that are associated with the particular user account.

In some embodiments, a plurality of media playback devices 104, such as the PMSA 110, the computing device 118, and other computing devices, can be respectively used to access media content service from the media delivery system 112 which is associated with a single user account. For example, a user can use different media playback devices 104, such as the PMSA 110 and the computing device 118, to log in to media content service with the user's user account information, and the media content service associated with the user account can be provided to one or more of the media playback devices 104 through which the user has logged in to the user account.

The device name field includes one or more device names 742 associated with the device IDs 740. The device status field identifies a device status 744 for each of the media playback devices 104 identified in the device data table 710. In some embodiments, the device status can be either active or inactive. When the device status of a media playback device 104 is active, the media playback device 104 is in operation and accessible by the media delivery system 112 via the network 116. When the device status of a media playback device 104 is inactive, the media playback device 104 is not in operation and thus inaccessible by the media delivery system 112 via the network 116.

The device setting table 712 includes information about settings that are configurable in one or more particular media playback devices. In some embodiments, the device setting table 712 can be referenced by the device data table 710. Other tables can reference the device setting table 712. The device setting table 712 can reference one or more other tables. In the illustrated example, the device setting table 712 indicates that the media playback device identified by the device ID ("ABCsge") has various settings, such as presets, playback settings, sound quality, notification, advertisement, and other user-configurable settings.

The preset table 714 includes information about presets associated with one or more particular media playback devices 104. In some embodiments, the preset table 714 can be referenced by the device setting table 712. Other tables can also reference the preset table 714. The preset table 714 can reference one or more other tables. In the illustrated example, the preset table 714 contains information about the presets provided in the media playback device identified by the device ID ("ABCsge").

Some embodiments of the preset table 714 include a field for preset identifiers (IDs) 750 and a field for media context identifiers (IDs) 752. The preset ID field contains one or more preset identifiers (IDs) 750 that identify presets provided in the particular media playback device 104. The context ID field contains one or more media context identifiers 752 associated with the preset identifiers 750, respectively. The media context identifiers 752 are used to identify media contexts 238, as described herein. In some embodiments, a media context identifier is configured as a Uniform Resource Identifier (URI).

In the illustrated examples of FIG. 7, the PMSA 110 includes the preset buttons 512, and the preset buttons 512 can be identified by the preset identifiers 750. As the preset identifiers 750 are associated with the media context identifiers 752 that identify media contexts, the preset buttons 512 in the PMSA 110 can be used to retrieve the media contexts identified by the media context identifiers 752.

The playback state table 716 include information about playback of one or more media contexts 238. In some embodiments, where a plurality of media playback devices 104 may be used to play media content associated with a particular user account, only one of the plurality of media playback devices 104 can be used to play the media content while the other media playback devices 104 may not be used to play the same media content simultaneously. In these embodiments, the playback state table 716 is configured to indicate playback information of the media content that is in common among the plurality of media playback devices associated with the particular user account. In other embodiments, the playback state table 716 is configured to indicate playback information for each of the media playback devices associated with the particular user account, where the media playback devices may be used independently to play media content in different manners.

In some embodiments, the playback state table 716 contains a current context 760, a current media content item (i.e., a current track) 762, a playback mode 764, a playback speed 766, and a next media content item (i.e., a next track) 768. In addition or alternatively, the playback state table 716 can contain other playback-related information. In some embodiments, the playback state table 716 can reference one or more other tables, and/or be referenced by one or more other tables. The current context 760 indicates a media context 238 that is being currently played in a media playback device 104. The current media content item 762 indicates a media content item that is being currently played from the current context 760. The playback mode 764 indicates a playback mode that is currently selected. Examples of the playback mode include a normal playback mode, a repeat playback mode, and a shuffle playback mode. The playback speed 766 indicates a playback speed that is currently selected. Examples of the playback speed include a normal playback speed, one or more faster playback speeds, and one or more slower playback speeds. The next media content item 768 indicates a media content item that is in queue and will be subsequently played after the current media content item 762.

Referring still to FIG. 9, the taste profile table 718 is configured to identify a taste profile 242 (FIG. 3) associated with the particular user account. In some embodiments, the taste profile table 718 can be referenced by the user account table 702. Other tables can reference the taste profile table 718. The taste profile table 718 can also reference one or more other tables.

With reference still to FIG. 9, the media context table 704 is configured to identify one or more media contexts 238 as described with reference to FIG. 3. As illustrated, some embodiments of the media context table 704 can respectively identify a media context 238 by a media context identifier 752. The media context table 704 contains various pieces of information about a corresponding media context 238. Examples of such information include a media context title 780, a media context type 782, a media context artist 784, a media context genre 786, and a list of media content items 788 associated with the media context 238. Other information can also be included in the media context table 704.

The media context title 780 indicates a title of the media context 238. The media context type 782 indicates a type of the media context 238, such as a playlist, an album, an artist, and a track. The media context artist 784 indicates one or more artists associated with the media context 238. The media context genre 786 indicates a genre associated with the media context 238. The list of media content items 788 indicates one or more media content items (i.e., tracks) associated with the media context 238. Each of the media content items can be identified by a track identifier 790. In some embodiments, one or more of the media content items 234, as described with reference to FIG. 3, are identified by the list of media content items 788.

The media content item table 706 is configured to identify one or more media content items (i.e., tracks) 792 by the track identifiers 790. In some embodiments, a track identifier is configured as a Uniform Resource Identifier (URI). In some embodiments, one or more of the media content items 792 are selected from the media content items 234 as described with reference to FIG. 3. The media content item table 706 can further include various attributes about the media content item 792, such as a media content item title, artist identification (e.g., individual artist name or group name, or multiple artist names or group names), genre, era, and other attributes of the media content item.

FIG. 10 is a block diagram that illustrates an example data structure 800 of the local appliance setting data 620. As described above, the local appliance setting data 620 can be stored in the PMSA system 110. In some embodiments, the local appliance setting data 620 include a user account identifier 802, a device identifier 804, and information about one or more settings 806. The user account identifier 802 is information that identifies a user account associated with the PMSA system 110. The device identifier 804 is information that identifies the PMSA system 110.

The setting information 806 can include information about one or more settings of the PMSA system 110. Examples of the setting information 806 include a playback mode 808, a playback speed 810, a sound quality 812, preset information 814, and other settings for controlling operation of the PMSA systems 110 or media content playback via the PMSA systems 110. The preset information 814 includes information about the preset buttons 512 of the PMSA system 110, such as preset identifiers (IDs) 816 that identify the preset buttons 512. In some embodiments, the preset information 814 can include media content, such as media context identifiers (IDs) 818, that is associated with the preset buttons 512. The setting information 806 is provided in the same or similar manner as the appliance setting information 634 described with reference to FIG. 8 and, therefore, the description of the setting information 806 is omitted for brevity purposes.

FIG. 11 is a communication flowchart that illustrates an example method 900 for controlling one or more settings of the PMSA system 110 using a computing device 118 in the ecosystem 600. In some embodiments, the method 900 is configured to provide media content 618 to the PMSA 110 for playback in the vehicle 80. In this example, the media delivery system 112 stores the remote appliance setting data 612. Further, the PMSA system 110 can also store the local appliance setting data 620.

The method 900 is primarily described below with an example embodiment of setting a preset button of the PMSA system 110. It is understood that other settings of the PMSA system 110 can be similarly controlled using the method 900. In some embodiments, the method 900 can be performed at least partially by the PMSA configuration engine 126 and/or at least partially by the preset-based media delivery engine 610.

In some embodiments, the method 900 can include receiving a preset signal 616 from a preset signal source 512 of the PMSA 110. The PMSA 110 can be associated with a user account and constructed for installation and use in the vehicle 80, as described herein. The method 900 can include providing at least a portion of first content 618 associated with the user account to the PMSA 110 responsive to receiving the preset signal 616.

In order to allow remotely controlling one or more setting of the PMSA 110, at operation 902, in some embodiments, the media delivery system 112 can store the remote appliance setting data 612 that include setting data associated with the PMSA system 110 that will be controlled. In some embodiments, the remote appliance setting data 612 include preset information 640 of the PMSA system 110. In alternative embodiments, the method 900 can begin at operation 904 without the operation 902.

At operation 904, the computing device 118 operates to receive a user input to control one or more settings of the PMSA system 110. In some embodiments, the user input is received via the user interface 420 to control the setting of a preset button 512 of the PMSA system 110. By way of example, the user input is a request for changing the current media context (e.g., a playlist) that is associated with the preset button 512 of the PMSA system 110 to another media context (e.g., another playlist).

In some embodiments, the method 900 can including receiving, while the PMSA 110 is in an inactive state, a preset adjustment 606 for the PMSA 110 from a media playback application 429 operating on the mobile device 118. In some embodiments, the media delivery system 112 can be configured to obtain, while the PMSA 110 is in an inactive state, a playback configuration adjustment 606 from the media playback application 429.

For example, at operation 906, the computing device 118 operates to transmit the PMSA setting request 606 to the media delivery system 112. The computing device 118 can generate the PMSA setting request 606 upon receiving the user input at the operation 904. In some embodiments, the PMSA setting request 606 can include a request for controlling the setting of the preset button 512 of the PMSA system 110. By way of example, the PMSA setting request 606 can include the request for replacing the current media context associated with the preset button 512 to a new media context.

In some embodiments, the PMSA setting request 606 can include at least one of the user account identifier 802 and the device identifier 804. As described herein, the user account identifier 802 identifies a user account associated with the PMSA system 110 being controlled, and the device identifier 804 identifies the PMSA system 110. In the example of controlling preset setting, the PMSA setting request 606 can include the preset information of the PMSA system 110, such as a preset identifier that identifies the preset button 512 of the PMSA system 110 that is to be adjusted. In some embodiments, the PMSA setting request 606 can further include information that identifies a new media context (e.g., a media context identifier) that has been requested by the user to be associated with the preset button 512 of the PMSA system 110.

In some embodiments, upon receiving the preset adjustment 606 from the mobile device 118, the method 900 can including storing the preset adjustment 606 at least until the PMSA 110 enters the active state. In some embodiments, the media delivery system 112 can be configured to store the playback configuration adjustment 606 at least until the PMSA 110 enters the active state.

For example, at operation 908, the media delivery system 112 operates to receive the PMSA setting request 606 and store the remote appliance setting data 612 for the PMSA system 110. Where the remote appliance setting data 612 has already been created and stored in the media delivery system 112 (at the operation 902), the media delivery system 112 modifies the remote appliance setting data 612 based on the PMSA setting request 606. For example, where the PMSA setting request 606 includes the request for replacing the current media context for the preset button 512 to a new media context, the preset information 640 of the remote appliance setting data 612 is stored or modified to associate the preset button with the new media context.

At operation 910, the media delivery system 112 operates to determine whether the PMSA system 110 is active. In some embodiments, responsive to the PMSA 110 entering an active state, the method 900 can include providing an updated setting 614 to the PMSA 110 based on the preset adjustment 606. In some embodiments, the media delivery system 112 can be configured to, responsive to the PMSA 110 entering an active state, provide an updated setting 614 to the PMSA 110 based on the playback configuration adjustment 606.

In some embodiments, the media delivery system 112 can communicate with the PMSA system 110 when the PMSA system 110 is active, and cannot communicate with the PMSA system 110 when the PMSA system 110 is inactive. If it is determined that the PMSA system 110 is inactive ("NO" at this operation), the method 900 returns to the operation 908 so that the remote appliance setting data 612 continues to be stored. Otherwise ("YES" in this operation), the method 900 moves on to operation 912.

At operation 912, the media delivery system 112 operates to transmit the local PMSA setting change data 614 to the PMSA system 110. As described in FIG. 7, the local PMSA setting change data 614 can be generated based at least in part on the information from the remote appliance setting data 612 of the media delivery system 112. In the example of the preset setting control, the local PMSA setting change data 614 include information about controlling the preset button 512 of the PMSA system 110 according to the user input received at the computing device 118.

At operation 914, the PMSA system 110 operates to receive the local PMSA setting change data 614 and change the setting of the PMSA system 110 based on the received local PMSA setting change data 614. In some embodiments, the local PMSA setting change data 614 modifies the local appliance setting data 620 stored in the PMSA system 110. In some embodiments, the setting of the PMSA system 110 is modified while the PMSA system 110 is active. In the example of the preset setting control above, the local appliance setting data 620 can be modified to change the preset information 814 so that the preset button 512 (e.g., the present identifier 816 thereof) is associated with the new media context (e.g., the media context identifier 818 thereof).

Referring still to FIG. 11, operations 916, 918, 920, 922, and 924 are primarily directed to data communication between the PMSA system 110 and the media delivery system 112 for media content playback after the setting of the PMSA system 110 has been controlled using the computing device 118 that is in communication with the media delivery system 112. In some embodiments, the operations 916, 918, 920, 922, and 924 can be performed at least partially by the preset-based media delivery engine 610 of the media delivery system 112.

In some embodiments, the method 900 can include receiving a second preset signal 616 from the PMSA 110. The second preset signal 616 is associated with the preset signal source 512. The method 900 can provide at least a portion of second content 618 associated with the user account responsive to receiving the second preset signal 616 to the PMSA 110.

For example, at operation 916, the PMSA system 110 receives a user request for media content playback. In some embodiments, the PMSA system 110 receives the user request via the preset button 512 of the PMSA system 110.

At operation 918, the PMSA system 110 generates and transmits a media content request 616 based on the user request. In some embodiments, the media content request 616 includes at least one of the user account identifier 802 and the device identifier 804. As described above, the user account identifier 802 identifies the user account associated with the PMSA system 110, and the device identifier 804 identifies the PMSA system 110.

In the example of the preset button control, the media content request 616 can include the preset information 814 of the PMSA, such as a preset identifier 816 that identifies the preset button 512 of the PMSA system 110 that is selected. In some embodiments, the media content request 616 can further include the media context identifier 818 that is associated with the preset identifier 816.

At operation 920, the media delivery system 112 receives the media content request 616 and identifies media content based on the media content request 616. In the example of the preset control, the media delivery system 112 operates to identify the media context that is assigned to the preset button 512 of the PMSA system 110 based on the received media content request 616.

At operation 922, the media delivery system 112 transmits the identified media content 618 to the PMSA system 110. In some embodiments, the media content 618 can be streamed to the PMSA system 110. In other embodiments, at least part of the media content 618 can be downloaded to the PMSA system 110.

At operation 924, the PMSA system 110 receives the media content 618 from the media delivery system 112 and play the media content 618. The media content 618 can be played in various ways. In some embodiments, as described herein, the media content 618 can be transmitted to the vehicle media playback system 114 for playback.

FIG. 12 is a communication flowchart that illustrates another example method 950 for controlling one or more settings of the PMSA system 110 using a computing device 118 in the ecosystem 600. In this example, the media delivery system 112 stores the remote appliance setting data 612 so that the information about the settings of the PMSA system 110 are stored in the media delivery system 112. In some embodiments, information about the preset button settings of the PMSA system 110 are stored in the media delivery system 112, and the PMSA system 110 does not locally store at least part of the information about the preset button settings.

The method 950 is primarily described below with an example embodiment of setting a preset button of the PMSA system 110. It is understood that other settings of the PMSA system 110 can be similarly controlled using the method 950. In some embodiments, the method 950 can be performed at least partially by the PMSA configuration engine 126 and/or at least partially by the preset-based media delivery engine 610.

At operation 952, the media delivery system 112 stores the remote appliance setting data 612 that include setting data associated with the PMSA system 110 that will be controlled. In some embodiments, the remote appliance setting data 612 include preset information 640 of the PMSA system 110.

At operation 954, the computing device 118 operates to receive a user input to control one or more settings of the PMSA system 110. In some embodiments, the user input is received to control the setting of a preset button 512 of the PMSA system 110. By way of example, the user input is a request for changing the current media context (e.g., a playlist) that is associated with the preset button 512 of the PMSA system 110 to another media context (e.g., another playlist).

At operation 956, the computing device 118 operates to transmit the PMSA setting request 606 to the media delivery system 112. The computing device 118 can generate the PMSA setting request 606 upon receiving the user input at the operation 904. In some embodiments, the PMSA setting request 606 can include a request for controlling the setting of the preset button 512 of the PMSA system 110. By way of example, the PMSA setting request 606 can include a request for replacing the current media context associated with the preset button 512 to a new media context.

In some embodiments, the PMSA setting request 606 can include at least one of the user account identifier 802 and the device identifier 804. As described herein, the user account identifier 802 identifies a user account associated with the PMSA system 110 being controlled, and the device identifier 804 identifies the PMSA system 110. In the example of controlling preset setting, the PMSA setting request 606 can include the preset information of the PMSA system 110, such as a preset identifier that identifies the preset button 512 of the PMSA system 110 that is to be adjusted. The PMSA setting request 606 can further include information that identifies a new media context (e.g., a media context identifier) that has been requested to be associated with the preset button 512 of the PMSA system 110.

At operation 958, the media delivery system 112 operates to receive the PMSA setting request 606 and modify the remote appliance setting data 612 for the PMSA system 110 based on the PMSA setting request 606. For example, where the PMSA setting request 606 includes the request for replacing the current media context for the preset button 512 to a new media context, the preset information 640 of the remote appliance setting data 612 is modified to associate the preset button with the new media context.

In this example of the method 950, once the remote appliance setting data 612 is modified in the media delivery system 112, the modified setting information does not need to be transmitted to the PMSA system 110 for a corresponding local update at the PMSA system 110. Because the setting information of the PMSA system 110 is stored in the media delivery system 112, the media delivery system 112 can process a request (e.g., a media content request) from the PMSA system 110 according to the modified setting of the PMSA system 110 that is found from the remote appliance setting data 612.

Referring still to FIG. 12, operations 960, 962, 964, 966, and 968 are similar to the operations 916, 918, 920, 922, and 924 of FIG. 11, respectively. Therefore, the description of operations 960, 962, 964, 966, and 968 are omitted for brevity purposes.

In this example of the method 950, the media content request 616 at the operation 962 can include at least one of the user account identifier 802 and the device identifier 804. In the example of the preset control, the media content request 616 can further include the preset information 814 of the PMSA, such as a preset identifier 816 that identifies the preset button 512 of the PMSA system 110 that is selected. However, in some embodiments, the media content request 616 does not include a media context identifier 818 because the media context identifier 818 that is associated with the preset identifier 816 of the selected preset button 512 is stored in the media delivery system 112 (e.g., the preset information 640 of the remote appliance setting data 612).

FIG. 13 schematically illustrates an example of the user interface 420 provided to the computing device 118 of FIG. 7. In this example, the user interface 420 is configured to receive a user input of controlling a preset setting 980 of the PMSA system 110. The preset setting 980 shows information about the preset buttons 512 of the PMSA system 110 that are controllable. Names of the preset buttons 512 (e.g., "Preset 1," "Preset 2," "Preset 3," and "Preset 4") can be shown on control elements 982 which can be selectable. The preset setting 980 can further display names of the media contexts 984 that are assigned to the preset buttons 512, respectively.

The user interface 420 can include a control element 986 (e.g., "Edit") that is selectable to enable a user to change the media contexts 984 associated with the preset buttons 512. The user interface 420 can also include a control element 988 (e.g., "Library") that is selectable to enable the user to search media content (e.g., media contexts) available to be assigned to the preset buttons 512.

In alterative embodiments, the user interface 420 for controlling the settings of the PMSA system 110 can be provided in different formats and/or in different context. For example, the user interface 420 can be provided along with playback back controls (e.g., play/pause, fast forward, rewind, etc.) while a media content item is being played.

The various examples and teachings described above are provided by way of illustration only and should not be construed to limit the scope of the present disclosure. Those skilled in the art will readily recognize various modifications and changes that may be made without following the examples and applications illustrated and described herein, and without departing from the true spirit and scope of the present disclosure.

## Claims

1. A method for providing media content (618) to a personal media streaming appliance, PMSA, (110) for playback in a vehicle (80), the method comprising:
receiving a preset signal (616) from a preset signal source (512) of the PMSA (110), wherein the PMSA (110) is associated with a user account and constructed for installation and use in the vehicle (80);
providing at least a portion of first content (618) associated with the user account to the PMSA (110) responsive to receiving the preset signal (616);
receiving, while the PMSA (110) is in an inactive state, a preset adjustment (606) for the PMSA (110) from a media playback application (429) operating on a mobile device (118);
responsive to the PMSA (110) entering an active state, providing an updated setting (614) to the PMSA (110) based on the preset adjustment (606);
receiving a second preset signal (616) from the PMSA (110), wherein the second preset signal (616) is associated with the preset signal source (512); and
providing at least a portion of second content (618) associated with the user account responsive to receiving the second preset signal (616) to the PMSA (110).

2. The method of claim 1, wherein the preset signal source includes a preset button (512) of the PMSA (110), and the preset signal (616) is generated upon actuation of the preset button (512) of the PMSA (110).

3. The method of claim 1 or 2, further comprising:
upon receiving the preset adjustment (606) from the mobile device (118), storing the preset adjustment (606) at least until the PMSA (110) enters the active state.

4. The method of any of claims 1-3, wherein the preset signal (616) includes at least one of a user account identifier (802) and a device identifier (804), the user account identifier (802) configured to identify the user account associated with the PMSA (110), and the device identifier (804) configured to identify the PMSA (110).

5. The method of any of claims 1-4, wherein the preset adjustment (606) includes a preset identifier (816) for identifying the preset button (512).

6. The method of any of claims 1-5, wherein the preset adjustment (606) includes preset adjustment information that indicates how the preset button setting is adjusted.

7. A system (600) for providing media content (618) in a vehicle (80), the system (600) comprising:
a media delivery system (112);
a personal media streaming appliance, PMSA, (110) configured for installation and use in the vehicle (80), and associated with a user account; and
a media playback application (429) operating on a mobile device (118) and associated with the user account,
wherein the media delivery system (112) is configured to:
obtain, while the PMSA (110) is in an inactive state, a playback configuration adjustment (606) from the media playback application (429); and
responsive to the PMSA (110) entering an active state, provide an updated setting (614) to the PMSA (110) based on the playback configuration adjustment (606).

8. The system of claim 7, wherein the PMSA (110) comprises a plurality of microphones (162) arranged to resist vehicle noise, the PMSA (110) thereby being configured for use in a vehicle environment.

9. The system of claim 7 or 8, wherein the PMSA (110) is free of a touch screen display, the PMSA (110) thereby being configured for use in a vehicle environment.

10. The system of any of claims 7-9, wherein the PMSA (110) includes a preset button (512) for initiating playback of media content (618) associated with the preset button (512), and
wherein the playback configuration adjustment (606) includes a preset adjustment associated with the preset button.

11. The system of any of claims 7-10, wherein the media delivery system (112) is further configured to:
storing the playback configuration adjustment (606) at least until the PMSA (110) enters the active state.

12. The system of any of claims 7-11, wherein the playback configuration adjustment (606) includes at least one of playback setting adjustment, sound quality adjustment, notification setting adjustment, and advertisement setting adjustment.

13. The system of any of claims 7-12, wherein the media delivery system (112) is further configured to:
receive a media content request (616) from the PMSA (110);
determine media content (618) based on the media content request (616); and
transmit the media content (618) to the PMSA (110) for playback.

14. The system of claim 13, wherein the PMSA (110) includes a media content output device (140) configured to transmit the media content received from the media delivery system (112) to a vehicle media playback system (114) such that the vehicle media playback system (114) plays the media content (618).

15. The system of any of claims 7-14, wherein the PMSA (110) includes a power input device (146) configured to electrically connected to a power source of the vehicle (80) and receive electric power from the vehicle (80).

## Amended claims

### Amended claims in accordance with Rule 137(2) EPC.

1. A method performed in a media delivery system (112) for providing media content (618) to a personal media streaming appliance, PMSA, (110) for playback in a vehicle (80), the media delivery system (112) comprising a media server application (212) configured to stream media content, the media server application comprising a media data store (226), storing media content items (234), and a media stream service (222), buffering media content items (230) for streaming to the PMSA (110), the method comprising:
receiving a preset signal (616) from a preset signal source (512) of the PMSA (110), wherein the PMSA (110) is associated with a user account and constructed for installation and use in the vehicle (80);
providing at least a portion of first content (618), of the media content, associated with the user account to the PMSA (110) responsive to receiving the preset signal (616);
receiving, while the PMSA (110) is in an inactive state, a preset adjustment (606) for the PMSA (110) from a media playback application (429) operating on a mobile device (118);
responsive to the PMSA (110) entering an active state, providing an updated setting (614) to the PMSA (110) based on the preset adjustment (606);
receiving a second preset signal (616) from the PMSA (110), wherein the second preset signal (616) is associated with the preset signal source (512); and
providing at least a portion of second content (618), of the media content, associated with the user account responsive to receiving the second preset signal (616) to the PMSA (110).

2. The method of claim 1, wherein the preset signal source includes a preset button (512) of the PMSA (110), and the preset signal (616) is generated upon actuation of the preset button (512) of the PMSA (110).

3. The method of claim 1 or 2, further comprising:
upon receiving the preset adjustment (606) from the mobile device (118), storing the preset adjustment (606) at least until the PMSA (110) enters the active state.

4. The method of any of claims 1-3, wherein the preset signal (616) includes at least one of a user account identifier (802) and a device identifier (804), the user account identifier (802) configured to identify the user account associated with the PMSA (110), and the device identifier (804) configured to identify the PMSA (110).

5. The method of any of claims 1-4, wherein the preset adjustment (606) includes a preset identifier (816) for identifying the preset button (512).

6. The method of any of claims 1-5, wherein the preset adjustment (606) includes preset adjustment information that indicates how the preset button setting is adjusted.

7. A system (600) for providing media content (618) in a vehicle (80), the system (600) comprising:
a personal media streaming appliance, PMSA, (110) configured for installation and use in the vehicle (80), and associated with a user account;
a media delivery system (112) comprising a media server application (212) configured to stream media content, the media server application comprising a media data store (226), storing media content items (234), and a media stream service (222) configured for buffering media content items (230) for streaming to the PMSA (110); and
a media playback application (429) operating on a mobile device (118) and associated with the user account,
wherein the media delivery system (112) is configured to:
obtain, while the PMSA (110) is in an inactive state, a playback configuration adjustment (606) from the media playback application (429); and
responsive to the PMSA (110) entering an active state, provide an updated setting (614) to the PMSA (110) based on the playback configuration adjustment (606).

8. The system of claim 7, wherein the PMSA (110) comprises a plurality of microphones (162) arranged to resist vehicle noise, the PMSA (110) thereby being configured for use in a vehicle environment.

9. The system of claim 7 or 8, wherein the PMSA (110) is free of a touch screen display, the PMSA (110) thereby being configured for use in a vehicle environment.

10. The system of any of claims 7-9, wherein the PMSA (110) includes a preset button (512) for initiating playback of media content (618) associated with the preset button (512), and
wherein the playback configuration adjustment (606) includes a preset adjustment associated with the preset button.

11. The system of any of claims 7-10, wherein the media delivery system (112) is further configured to:
storing the playback configuration adjustment (606) at least until the PMSA (110) enters the active state.

12. The system of any of claims 7-11, wherein the playback configuration adjustment (606) includes at least one of playback setting adjustment, sound quality adjustment, notification setting adjustment, and advertisement setting adjustment.

13. The system of any of claims 7-12, wherein the media delivery system (112) is further configured to:
receive a media content request (616) from the PMSA (110);
determine media content (618) based on the media content request (616); and
transmit the media content (618) to the PMSA (110) for playback.

14. The system of claim 13, wherein the PMSA (110) includes a media content output device (140) configured to transmit the media content received from the media delivery system (112) to a vehicle media playback system (114) such that the vehicle media playback system (114) plays the media content (618).

15. The system of any of claims 7-14, wherein the PMSA (110) includes a power input device (146) configured to electrically connected to a power source of the vehicle (80) and receive electric power from the vehicle (80).
